(19) Europäisches Patentamt
European Patent Office
Office européen des brevets

(11) EP 4 692 016 A1

(12) **EUROPEAN PATENT APPLICATION**
published in accordance with Art. 153(4) EPC

(43) Date of publication:
**11.02.2026 Bulletin 2026/07**

(21) Application number: **24780540.1**

(22) Date of filing: **27.03.2024**

(51) International Patent Classification (IPC):
***C03C 27/12*** (2006.01) ***B32B 17/10*** (2006.01)

(52) Cooperative Patent Classification (CPC):
**B32B 17/00; B32B 17/10**

(86) International application number:
**PCT/JP2024/012452**

(87) International publication number:
**WO 2024/204439 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.03.2023 JP 2023058722**

(71) Applicant: **Sekisui Chemical Co., Ltd.**
**Osaka-shi, Osaka 530-8565 (JP)**

(72) Inventors:
- **YAMAZAKI, Koushi**
  **Kouka-shi, Shiga 528-8585 (JP)**
- **SAITOU, Ryouta**
  **Kouka-shi, Shiga 528-8585 (JP)**

(74) Representative: **Ter Meer Steinmeister & Partner Patentanwälte mbB**
**Nymphenburger Straße 4**
**80335 München (DE)**

(54) **INTERLAYER FILM FOR LAMINATED GLASS, AND LAMINATED GLASS**

(57) Provided is an interlayer film for laminated glass capable of enhancing the vibration damping property in a high frequency region in end parts of laminated glass corresponding to end parts of the interlayer film. The interlayer film for laminated glass according to the present invention has a first end, and a second end being at an opposite side of the first end, and when laminated glasses P, Q, R, S obtained by arranging a specific part of the interlayer film between two sheets of 2.0 mm-thick green glass are obtained, a specific configuration A or a specific configuration B is satisfied.

[FIG. 1]

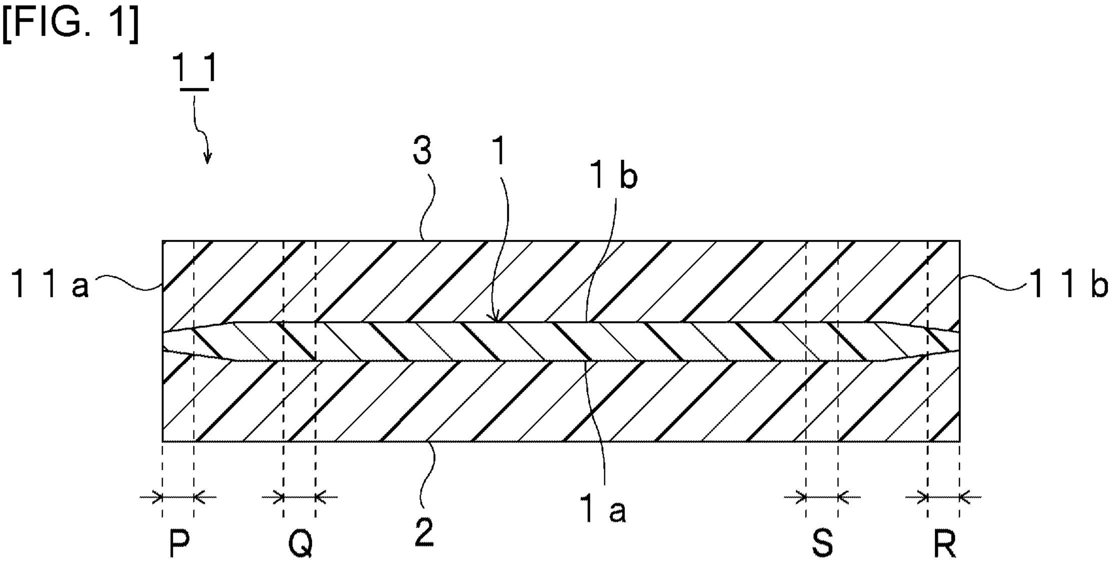




Processed by Luminess, 75001 PARIS (FR)

## Description

### TECHNICAL FIELD

The present invention relates to an interlayer film for laminated glass that is used for obtaining laminated glass. Moreover, the present invention relates to a laminated glass prepared with the interlayer film for laminated glass.

### BACKGROUND ART

Since laminated glass generates only a small amount of scattering glass fragments even when subjected to external impact and broken, laminated glass is excellent in safety. As such, laminated glass is widely used for automobiles, railway vehicles, aircraft, ships, buildings and the like. Laminated glass is produced by sandwiching an interlayer film between a pair of glass plates.

The following Patent Document 1 discloses a viscoelastic plastic intermediate layer (interlayer film) that is intended to be taken in between two glass plates for the purpose of forming a layered grazing (laminated glass) having a vibro-acoustic attenuation characteristic. The intermediate layer includes at least one viscoelastic plastic layer having vibro-acoustic attenuation characteristic, and has a specific resonance frequency and a specific loss coefficient.

### Related Art Document

### Patent Document

Patent Document 1: WO 2013/175101 A1

### SUMMARY OF THE INVENTION

### PROBLEMS TO BE SOLVED BY THE INVENTION

An interlayer film is generally produced by extrusion molding. The present inventors found that, in a laminated glass prepared with an interlayer film produced by extrusion molding, vibration damping property in a high frequency region sometimes cannot be enhanced in end parts of the laminated glass corresponding to end parts of the interlayer film.

It is an object of the present invention to provide an interlayer film for laminated glass capable of enhancing the vibration damping property in a high frequency region in end parts of laminated glass corresponding to end parts of the interlayer film. It is also an object of the present invention to provide a laminated glass capable of enhancing vibration damping property in a high frequency region in end parts of the laminated glass.

### MEANS FOR SOLVING THE PROBLEMS

In the present specification, the following interlayer film for laminated glass and laminated glass are disclosed.

Item 1. An interlayer film for laminated glass, the interlayer film having a first end, and a second end being at an opposite side of the first end, when a laminated glass P obtained by arranging a part of the interlayer film from a position of 0 mm to a position of 25 mm from the first end toward the second end between two sheets of 2.0 mm-thick green glass, a laminated glass Q obtained by arranging a part of the interlayer film from a position of 100 mm to a position of 125 mm from the first end toward the second end between two sheets of 2.0 mm-thick green glass, a laminated glass R obtained by arranging a part of the interlayer film from a position of 0 mm to a position of 25 mm from the second end toward the first end between two sheets of 2.0 mm-thick green glass, and a laminated glass S obtained by arranging a part of the interlayer film from a position of 100 mm to a position of 125 mm from the second end toward the first end between two sheets of 2.0 mm-thick green glass are obtained, configuration A or configuration B below being satisfied.

Configuration A: change rate A1 represented by formula (A1) below is less than 10%, and change rate A2 represented by formula (A2) below is less than 10%.

$$\text{Change rate A1 (\%)} = (|P_A - Q_A|/Q_A) \times 100 \quad \ldots(A1)$$

$P_A$: secondary loss coefficient of the laminated glass P,
$Q_A$: secondary loss coefficient of the laminated glass Q.

$$\text{Change rate A2 (\%)} = (|R_A - S_A|/S_A) \times 100 \quad \ldots(A2)$$

$R_A$: secondary loss coefficient of the laminated glass R,
$S_A$: secondary loss coefficient of the laminated glass S.

Configuration B: change rate B1 represented by formula (B1) below is less than 10%, and change rate B2 represented by formula (B2) below is less than 10%.

$$\text{Change rate B1 (\%)} = (|P_B - Q_B|/Q_B) \times 100 \quad ...(B1)$$

$P_B$: secondary resonance frequency of the laminated glass P,
$Q_B$: secondary resonance frequency of the laminated glass Q.

$$\text{Change rate B2(\%)} = (|R_B - S_B|/S_B) \times 100 \quad ...(B2)$$

$R_B$: secondary resonance frequency of the laminated glass R,
$S_B$: secondary resonance frequency of the laminated glass S.

Item 2. The interlayer film for laminated glass according to item 1, wherein the configuration A is satisfied.
Item 3. The interlayer film for laminated glass according to item 1, wherein the configuration B is satisfied.
Item 4. The interlayer film for laminated glass according to item 1, wherein the configuration A and the configuration B are satisfied.
Item 5. The interlayer film for laminated glass according to any one of items 1 to 4, including: a first layer containing a resin; and a second layer containing a resin, the second layer being arranged on a first surface side of the first layer.
Item 6. The interlayer film for laminated glass according to item 5, wherein the resin in the first layer is a thermoplastic resin, and the resin in the second layer is a thermoplastic resin.
Item 7. The interlayer film for laminated glass according to item 5 or 6, including: a third layer containing a resin, the third layer being arranged on a second surface side opposite to the first surface side of the first layer.
Item 8. The interlayer film for laminated glass according to item 7, wherein the resin in the third layer is a thermoplastic resin.
Item 9. The interlayer film for laminated glass according to any one of items 5 to 8, wherein glass transition temperature of the first layer is different from glass transition temperature of the second layer.
Item 10. The interlayer film for laminated glass according to any one of items 5 to 9, wherein glass transition temperature of a layer having the highest glass transition temperature is 32°C or more.
Item 11. The interlayer film for laminated glass according to item 10, wherein the glass transition temperature of the layer having the highest glass transition temperature is 37°C or more.
Item 12. The interlayer film for laminated glass according to any one of items 5 to 11, wherein the second layer is a surface layer of the interlayer film, and the second layer is a layer having the highest glass transition temperature.
Item 13. The interlayer film for laminated glass according to any one of items 5 to 12, wherein tanδ at glass transition temperature of a layer having the lowest glass transition temperature is 1.2 or more.
Item 14. The interlayer film for laminated glass according to item 13, wherein tanδ at the glass transition temperature of the layer having the lowest glass transition temperature is 1.4 or more.
Item 15. The interlayer film for laminated glass according to any one of items 5 to 14, wherein the first layer is the layer having the lowest transition temperature.
Item 16. An interlayer film for laminated glass according to any one of items 5 to 15, wherein an end surface of the first end has an end surface of the layer having the lowest glass transition temperature, and an end surface of the second end has an end surface of the layer having the lowest glass transition temperature.
Item 17. The interlayer film for laminated glass according to any one of items 5 to 16, wherein configuration C below is satisfied.
Configuration C: change rate C1 represented by formula (C1) below is more than 0% and 50% or less, and change rate C2 represented by formula (C2) below is more than 0% and 50% or less.

$$\text{Change rate C1 (\%)} = (|T_P - T_Q|/T_Q) \times 100 \quad ...(C1)$$

$T_P$: a ratio of thickness of the layer having the lowest glass transition temperature at a position of 12.5 mm from the first end toward the second end to thickness of the interlayer film at a position of 12.5 mm from the first end toward the second end,
$T_Q$: a ratio of thickness of the layer having the lowest glass transition temperature at a position of 112.5 mm from the first end toward the second end to thickness of the interlayer film at a position of 112.5 mm from the first end toward the

second end.

$$\text{Change rate C2 (\%)} = (|T_R - T_S|/T_S) \times 100 \text{ ...(C2)}$$

$T_R$: a ratio of thickness of the layer having the lowest glass transition temperature at a position of 12.5 mm from the second end toward the first end to thickness of the interlayer film at a position of 12.5 mm from the second end toward the first end,
$T_S$: a ratio of thickness of the layer having the lowest glass transition temperature at a position of 112.5 mm from the second end toward the first end to thickness of the interlayer film at a position of 112.5 mm from the second end toward the first end.

Item 18. The interlayer film for laminated glass according to any one of items 1 to 17, containing: a resin and a plasticizer, wherein a content of the plasticizer contained in the interlayer film per 100 parts by weight of the resin contained in the interlayer film is 36 parts by weight or less.
Item 19. The interlayer film for laminated glass according to any one of items 1 to 18, wherein a sectional shape in a thickness direction of the interlayer film is a wedge-like shape.
Item 20. A laminated glass comprising: a first lamination glass member; a second lamination glass member; and the interlayer film for laminated glass according to any one of items 1 to 19, the interlayer film for laminated glass being arranged between the first lamination glass member and the second lamination glass member.
Item 21. A laminated glass, having a first end, and a second end being at an opposite side of the first end, wherein configuration A' below or configuration B' is satisfied.
Configuration A': change rate A3 represented by formula (A3) below is less than 10%, and change rate A4 represented by formula (A4) below is less than 10%.

$$\text{Change rate A3 (\%)} = (|P_A' - Q_A'|/Q_A') \times 100 \text{ ...(A3)}$$

$P_A'$: a secondary loss coefficient of the laminated glass in a part of the laminated glass from a position of 0 mm to a position of 25 mm from the first end toward the second end,
$Q_A'$: a secondary loss coefficient of the laminated glass in a part of the laminated glass from a position of 100 mm to a position of 125 mm from the first end toward the second end.

$$\text{Change rate A4 (\%)} = (|R_A' - S_A'|/S_A') \times 100 \text{ ...(A4)}$$

$R_A'$: a secondary loss coefficient of the laminated glass in a part of the laminated glass from a position of 0 mm to a position of 25 mm from the second end toward the first end,
$S_A'$: a secondary loss coefficient of the laminated glass in a part of the laminated glass from a position of 100 mm to a position of 125 mm from the second end toward the first end,

Configuration B': change rate B3 represented by formula (B3) below is less than 10%, and change rate B4 represented by formula (B4) below is less than 10%.

$$\text{Change rate B3 (\%)} = (|P_B' - Q_B'|/Q_B') \times 100 \text{ ...(B3)}$$

$P_B'$: a secondary resonance frequency of the laminated glass in a part of the laminated glass from a position of 0 mm to a position of 25 mm from the first end toward the second end,
$Q_B'$: a secondary resonance frequency of the laminated glass in a part of the laminated glass from a position of 100 mm to a position of 125 mm from the first end toward the second end.

$$\text{Change rate B4 (\%)} = (|R_B' - S_B'|/S_B') \times 100 \text{ ...(B4)}$$

$R_B'$: a secondary resonance frequency of the laminated glass in a part of the laminated glass from a position of 0 mm to a position of 25 mm from the second end toward the first end,
$S_B'$: a secondary resonance frequency of the laminated glass in a part of the laminated glass from a position of 100 mm to a position of 125 mm from the second end toward the first end.

## EFFECT OF THE INVENTION

In the interlayer film for laminated glass according to the present invention, it is possible to enhance the vibration damping property in a high frequency region in end parts of laminated glass corresponding to end parts of the interlayer film.

In the laminated glass according to the present invention, it is possible to enhance the vibration damping property in a high frequency region in end parts of the laminated glass.

## BRIEF DESCRIPTION OF DRAWINGS

[Fig. 1] Fig. 1 is a sectional view schematically showing an interlayer film for laminated glass in accordance with a first embodiment of the present invention.

[Fig. 2] Fig. 2 is a sectional view schematically showing an interlayer film for laminated glass in accordance with a second embodiment of the present invention.

[Fig. 3] Fig. 3 is a sectional view schematically showing an example of laminated glass prepared with the interlayer film for laminated glass shown in Fig. 1.

[Fig. 4] Fig. 4 is a sectional view schematically showing an example of laminated glass prepared with the interlayer film for laminated glass shown in Fig. 2.

## MODE(S) FOR CARRYING OUT THE INVENTION

Hereinafter, the details of the present invention will be described.

(Interlayer film for laminated glass)

The interlayer film for laminated glass (in the present specification, sometimes abbreviated as "interlayer film") according to the present invention is used for laminated glass.

The interlayer film has a one-layer structure or a two or more-layer structure. The interlayer film may have a one-layer structure and may have a two or more-layer structure. The interlayer film may have a two-layer structure, may have a two or more-layer structure, may have a three-layer structure and may have a three or more-layer structure. The interlayer film may have a ten or less-layer structure and may have a five or less-layer structure. The interlayer film may include only the first layer. The interlayer film may include the first layer, and a second layer arranged on a first surface side of the first layer. The interlayer film may include a first layer, a second layer arranged on a first surface side of the first layer, and a third layer arranged on a second surface side opposite to the first surface side of the first layer. The interlayer film may be a single-layered interlayer film and may be a multi-layered interlayer film. The structure of the interlayer film may partially vary. For example, the interlayer film may have a part having a one-layer structure, and a part having a multi-layer structure.

The interlayer film has a first end (one end), and a second end (other end) being at an opposite side of the first end. The first end and the second end are both ends facing each other in the interlayer film. The interlayer film has an MD direction and a TD direction. The interlayer film is obtained, for example, by extrusion molding, and is an extrusion molded product (preferably a melt extrusion molded product). The MD direction is a flow direction of an interlayer film at the time of producing the interlayer film. The TD direction is a direction perpendicular to the flow direction of an interlayer film at the time of producing the interlayer film and a direction perpendicular to the thickness direction of the interlayer film. The first end and the second end are both ends facing each other in the TD direction of the interlayer film.

The following laminated glasses P, Q, R, S are prepared with the interlayer film. The laminated glass Q and the laminated glass S are sometimes identical depending on the distance between the first end and the second end in the interlayer film.

Laminated glass P:

A laminated glass obtained by arranging between two sheets of 2.0 mm-thick green glass, a part of the interlayer film from a position of 0 mm to a position of 25 mm from the first end toward the second end. A position of 0 mm from the first end toward the second end means the position of the first end of the interlayer film.

Laminated glass Q:

A laminated glass obtained by arranging between two sheets of 2.0 mm-thick green glass, a part of the interlayer

film from a position of 100 mm to a position of 125 mm from the first end toward the second end.

Laminated glass R:

A laminated glass obtained by arranging between two sheets of 2.0 mm-thick green glass, a part of the interlayer film from a position of 0 mm to a position of 25 mm from the second end toward the first end. A position of 0 mm from the second end toward the first end means the position of the second end of the interlayer film.

Laminated glass S:

A laminated glass obtained by arranging between two sheets of 2.0 mm-thick green glass, a part of the interlayer film from a position of 100 mm to a position of 125 mm from the second end toward the first end.
The laminated glasses P, Q, R, S can be prepared, for example, in the following manner.

Method for preparing laminated glass P:

An interlayer film for preparation of laminated glass P is prepared, for example, by cutting out from the interlayer film, a part of the interlayer film from a position of 0 mm to a position of 25 mm from the first end toward the second end. The interlayer film for preparation of laminated glass P is sandwiched between two sheets of 2.0 mm-thick green glass conforming to JIS R3208 to obtain a laminate. The obtained laminate is put into a rubber bag and the inside thereof is degassed for 20 minutes with a degree of vacuum of 0.08 MPa, after which the laminate in the degassed condition is transferred into an oven, and vacuum-pressed by retention at 90°C for 30 minutes, and thus the laminate is preliminarily press-bonded. The preliminarily press-bonded laminate is subjected to press-bonding for 20 minutes under conditions of 140°C and a pressure of 1.3 MPa in an autoclave to obtain the laminated glass P.

Method for preparing laminated glass Q:

An interlayer film for preparation of laminated glass Q is prepared, for example, by cutting out from the interlayer film, a part of the interlayer film from a position of 100 mm to a position of 125 mm from the first end toward the second end. The laminated glass Q is obtained in the same manner as the preparation method of laminated glass P except that the interlayer film for preparation of laminated glass Q is used.

Method for preparing laminated glass R:

An interlayer film for preparation of laminated glass R is prepared, for example, by cutting out from the interlayer film, a part of the interlayer film from a position of 0 mm to a position of 25 mm from the second end toward the first end. The laminated glass R is obtained in the same manner as the preparation method of laminated glass P except that the interlayer film for preparation of laminated glass R is used.

Method for preparing laminated glass S:

An interlayer film for preparation of laminated glass S is prepared, for example, by cutting out from the interlayer film, a part of the interlayer film from a position of 100 mm to a position of 125 mm from the second end toward the first end. The laminated glass S is obtained in the same manner as the preparation method of laminated glass P except that the interlayer film for preparation of laminated glass S is used.
The laminated glasses P, Q, R, S may be obtained in the following method.
The interlayer film is sandwiched between two sheets of 2.0-mm-thick green glass conforming to JIS R3208 to obtain a laminate. The obtained laminate is put into a rubber bag and the inside thereof is degassed for 20 minutes with a degree of vacuum of 0.08 MPa, after which the laminate in the degassed condition is transferred into an oven, and vacuum-pressed by retention at 90°C for 30 minutes, and thus the laminate is preliminarily press-bonded. The preliminarily press-bonded laminate is subjected to press-bonding for 20 minutes under conditions of 140°C and a pressure of 1.3 MPa in an autoclave to obtain a laminated glass X. The obtained laminated glass X is cut at a predetermined position to give laminated glasses P, Q, R, S.
The laminated glasses P, Q, R, S each have a width of 25 mm. The laminated glasses P, Q, R, S each have a length of 300 mm because the length is desirable for later-described measurement of secondary loss coefficient and secondary resonance frequency.
When the laminated glasses P, Q, R, S are obtained, configuration A below or configuration B below is satisfied in the interlayer film.

Configuration A: change rate A1 represented by formula (A1) below is less than 10%, and change rate A2 represented by formula (A2) below is less than 10%.

$$\text{Change rate A1 (\%)} = (|P_A - Q_A|/Q_A) \times 100 \quad \text{...(A1)}$$

$P_A$: secondary loss coefficient of the laminated glass P
$Q_A$: secondary loss coefficient of the laminated glass Q

$$\text{Change rate A2 (\%)} = (|R_A - S_A|/S_A) \times 100 \quad \text{...(A2)}$$

$R_A$: secondary loss coefficient of the laminated glass R
$S_A$: secondary loss coefficient of the laminated glass S

Configuration B: change rate B1 represented by formula (B1) below is less than 10%, and change rate B2 represented by formula (B2) below is less than 10%.

$$\text{Change rate B1 (\%)} = (|P_B - Q_B|/Q_B) \times 100 \quad \text{...(B1)}$$

$P_B$: secondary resonance frequency of the laminated glass P
$Q_B$: secondary resonance frequency of the laminated glass Q

$$\text{Change rate B2(\%)} = (|R_B - S_B|/S_B) \times 100 \quad \text{...(B2)}$$

$R_B$: secondary resonance frequency of the laminated glass R
$S_B$: secondary resonance frequency of the laminated glass S

In the interlayer film according to the present invention, since the above configuration is provided, it is possible to enhance the vibration damping property in a high frequency region in end parts of laminated glass corresponding to end parts of the interlayer film.

An interlayer film is generally produced by extrusion molding. The present inventors found that, in a laminated glass (especially, interlayer film having two or more-layer structure) prepared with an interlayer film produced by extrusion molding, the vibration damping property in a high frequency region (for example, 1000 Hz or more and 3000 Hz or less) sometimes cannot be enhanced in end parts of the laminated glass corresponding to end parts of the interlayer film.

The present inventors diligently studied about the reasons of the above, and found the following (1) and (2). (1) In extrusion molding, even though layers can be formed in desired ratio of thickness in the center part of the interlayer film, it is sometimes the case that the layers cannot be formed in desired ratio of thickness in end parts of both sides facing with each other in the TD direction of the interlayer film. For example, even when extrusion molding is performed such that each layer has a uniform thickness, the thickness of each layer is easy to change in end parts of both sides facing each other in the TD direction of the interlayer film, resulting that the ratio of thickness is easy to change. In particular, in an intermediate layer of the interlayer film, the thickness is easily decreased unintendedly in end parts of both sides facing each other in the TD direction of the interlayer film. (2) The unintended change in ratio of thickness between layers in end parts of the interlayer film causes reduction in vibration damping property in a high frequency region in end parts of the laminated glass.

The present inventors diligently studied and found that with the interlayer film in which the configuration A or the configuration B is satisfied, it is possible to enhance the vibration damping property in a high frequency region in end parts of a laminated glass corresponding to end parts of the interlayer film.

It is also conceivable that the entire part where layers of the interlayer film do not have a desired ratio of thickness is cut out, and the cut interlayer film is used to produce a laminated glass so as to keep the vibration damping property in a high frequency region in end parts. This method, however, causes generation of a lot of off-cuts.

In contrast to this, the interlayer film according to the present invention is capable of enhancing the vibration damping property in a high frequency region while contributing to reduction in off-cuts.

In the interlayer film according to the present invention, since it is possible to enhance the vibration damping property in a high frequency region in end parts of laminated glass, it is possible to enhance the vibration damping property in a high frequency region in the entire laminated glass.

In the interlayer film, the configuration A may be satisfied, the configuration B may be satisfied, and the configuration A and the configuration B may be satisfied. From the viewpoint of exerting the effect of the present invention more effectively, it is preferred that the configuration B be satisfied, and it is more preferred that the configuration A and the

configuration B be satisfied in the interlayer film.

In the interlayer film in which the configuration A is satisfied, the change rate A1 represented by the formula (A1) is less than 10%, and the change rate A2 represented by the formula (A2) is less than 10%.

The change rate A1 is preferably more than 0%, more preferably 1% or more, still more preferably 1.8% or more, further preferably 2% or more, especially preferably 3% or more, most preferably 4% or more, and is preferably 9.7% or less, more preferably 9% or less, still more preferably 8% or less, further preferably 7% or less, especially preferably 6% or less. When the change rate A1 is more than the above lower limit or the above lower limit or more, it is possible to effectively suppress the generation of off-cuts in production of the interlayer film. When the change rate A1 is the above upper limit or less, it is possible to exert the effect of the present invention more effectively. The range of the change rate A1 can be set by appropriately selecting the upper limit value and the lower limit value.

In the interlayer film in which the configuration A is satisfied, it is preferred that the change rate A1 satisfies the aforementioned lower limit or upper limit in at least part of region in the MD direction. In the interlayer film in which the configuration A is satisfied, when secondary loss coefficients are measured for the laminated glass P having a length in the MD direction of 300 mm, and the laminated glass Q having a length in the MD direction of 300 mm, it is more preferred that the change rate A1 satisfy the above lower limit or upper limit. In the interlayer film in which the configuration A is satisfied, when secondary loss coefficients are measured for two sheets of the laminated glass P having a length in the MD direction of 300 mm, and two sheets of the laminated glass Q having a length in the MD direction of 300 mm prepared from a section of 600 mm in the MD direction, it is further preferred that the change rate A1 calculated from averages of the measured secondary loss coefficients of each section satisfy the above lower limit or upper limit. In the interlayer film in which the configuration A is satisfied, when secondary loss coefficients are measured for three sheets of the laminated glass P having a length in the MD direction of 300 mm, and three sheets of the laminated glass Q having a length in the MD direction of 300 mm prepared from a section of 900 mm in the MD direction, it is especially preferred that the change rate A1 calculated from averages of the measured secondary loss coefficients of each section satisfy the above lower limit or upper limit. In the interlayer film in which the configuration A is satisfied, when secondary loss coefficients are measured for three sheets of the laminated glass P having a length in the MD direction of 300 mm, and three sheets of the laminated glass Q having a length in the MD direction of 300 mm prepared from a section of 900 mm in the MD direction, it is most preferred that the change rate A1 calculated from the measured secondary loss coefficients of each section respectively satisfy the above lower limit or upper limit.

A secondary loss coefficient ($P_A$) of the laminated glass P is preferably 0.20 or more, more preferably 0.25 or more, further preferably 0.30 or more, and especially preferably 0.35 or more. When the secondary loss coefficient ($P_A$) is the above lower limit or more, it is possible to further enhance the sound insulating property of laminated glass. The secondary loss coefficient ($P_A$) of the laminated glass P may be 0.80 or less, may be 0.75 or less, may be 0.70 or less, may be 0.65 or less, may be 0.60 or less, may be 0.55 or less, may be 0.50 or less, and may be 0.45 or less. A range of the secondary loss coefficient ($P_A$) of the laminated glass P can be set by appropriately selecting the above upper limit value and the above lower limit value.

A secondary loss coefficient ($Q_A$) of the laminated glass Q is preferably 0.20 or more, more preferably 0.30 or more, and further preferably 0.35 or more. When the secondary loss coefficient ($Q_A$) is the above lower limit or more, it is possible to further enhance the sound insulating property of laminated glass. A secondary loss coefficient ($Q_A$) of the laminated glass Q may be 0.55 or less, may be 0.50 or less, and may be 0.45 or less. A range of the secondary loss coefficient ($Q_A$) of the laminated glass Q can be set by appropriately selecting the above upper limit value and the above lower limit value.

The change rate A2 is preferably more than 0%, more preferably 1% or more, still more preferably 1.2% or more, further preferably 2% or more, especially preferably 3% or more, most preferably 4% or more, and is preferably 9% or less, more preferably 8% or less, still more preferably 7% or less, further preferably 6.9% or less, especially preferably 6% or less. When the change rate the change rate A2 is more than the above lower limit or the above lower limit or more, it is possible to effectively suppress the generation of off-cuts in production of the interlayer film. When the change rate A2 is the above upper limit or less, it is possible to exert the effect of the present invention more effectively. The range of the change rate A2 can be set by appropriately selecting the upper limit value and the lower limit value.

In the interlayer film in which the configuration A is satisfied, it is preferred that the change rate A2 satisfies the aforementioned lower limit or upper limit in at least part of region in the MD direction. In the interlayer film in which the configuration A is satisfied, when secondary loss coefficients are measured for the laminated glass R having a length in the MD direction of 300 mm, and the laminated glass S having a length in the MD direction of 300 mm, it is more preferred that the change rate A2 satisfy the above lower limit or upper limit. In the interlayer film in which the configuration A is satisfied, when secondary loss coefficients are measured for two sheets of the laminated glass R having a length in the MD direction of 300 mm, and two sheets of the laminated glass S having a length in the MD direction of 300 mm prepared from a section of 600 mm in the MD direction, it is further preferred that the change rate A2 calculated from averages of the measured secondary loss coefficients of each section satisfy the above lower limit or upper limit. In the interlayer film in which the configuration A is satisfied, when secondary loss coefficients are measured for three sheets of the laminated glass R

having a length in the MD direction of 300 mm, and three sheets of the laminated glass S having a length in the MD direction of 300 mm prepared from a section of 900 mm in the MD direction, it is especially preferred that the change rate A2 calculated from averages of the measured secondary loss coefficients of each section satisfy the above lower limit or upper limit. In the interlayer film in which the configuration A is satisfied, when secondary loss coefficients are measured for three sheets of the laminated glass R having a length in the MD direction of 300 mm, and three sheets of the laminated glass S having a length in the MD direction of 300 mm prepared from a section of 900 mm in the MD direction, it is most preferred that the change rate A2 calculated from the measured secondary loss coefficients of each section respectively satisfy the above lower limit or upper limit.

A secondary loss coefficient ($R_A$) of the laminated glass R is preferably 0.20 or more, more preferably 0.25 or more, further preferably 0.30 or more, and especially preferably 0.35 or more. When the secondary loss coefficient ($R_A$) is the above lower limit or more, it is possible to further enhance the sound insulating property of laminated glass. The secondary loss coefficient ($R_A$) of the laminated glass R may be 0.80 or less, may be 0.75 or less, may be 0.70 or less, may be 0.65 or less, may be 0.60 or less, may be 0.55 or less, may be 0.50 or less, and may be 0.45 or less. A range of the secondary loss coefficient ($R_A$) of the laminated glass R can be set by appropriately selecting the above upper limit value and the above lower limit value.

A secondary loss coefficient ($S_A$) of the laminated glass S is preferably 0.20 or more, more preferably 0.30 or more, and further preferably 0.35 or more. When the secondary loss coefficient ($S_A$) is the above lower limit or more, it is possible to further enhance the sound insulating property of laminated glass. A secondary loss coefficient ($S_A$) of the laminated glass S may be 0.55 or less, may be 0.50 or less, and may be 0.45 or less. A range of the secondary loss coefficient ($S_A$) of the laminated glass S can be set by appropriately selecting the above upper limit value and the above lower limit value.

In the interlayer film in which the configuration B is satisfied, change rate B1 represented by the formula (B1) is less than 10%, and a change rate B2 represented by the formula (B2) is less than 10%.

The change rate B1 is preferably more than 0%, more preferably 1% or more, still more preferably 1.8% or more, further preferably 2% or more, especially preferably 3% or more, most preferably 4% or more, and is preferably 9% or less, more preferably 8% or less, still more preferably 7.9% or less, further preferably 7% or less, especially preferably 6% or less. When the change rate the change rate B1 is more than the above lower limit or the above lower limit or more, it is possible to effectively suppress the generation of off-cuts in production of the interlayer film. When the change rate B1 is the above upper limit or less, it is possible to exert the effect of the present invention more effectively. The range of the change rate B1 can be set by appropriately selecting the upper limit value and the lower limit value.

In the interlayer film in which the configuration B is satisfied, it is preferred that the change rate B1 satisfies the aforementioned lower limit or upper limit in at least part of region in the MD direction. In the interlayer film in which the configuration B is satisfied, when secondary resonance frequencies are measured for the laminated glass P having a length in the MD direction of 300 mm, and the laminated glass Q having a length in the MD direction of 300 mm, it is more preferred that the change rate B1 satisfy the above lower limit or upper limit. In the interlayer film in which the configuration B is satisfied, when secondary resonance frequencies are measured for two sheets of the laminated glass P having a length in the MD direction of 300 mm, and two sheets of the laminated glass Q having a length in the MD direction of 300 mm prepared from a section of 600 mm in the MD direction, it is further preferred that the change rate B1 calculated from averages of the measured secondary resonance frequencies of each section satisfy the above lower limit or upper limit. In the interlayer film in which the configuration B is satisfied, when secondary resonance frequencies are measured for three sheets of the laminated glass P having a length in the MD direction of 300 mm, and three sheets of the laminated glass Q having a length in the MD direction of 300 mm prepared from a section of 900 mm in the MD direction, it is especially preferred that the change rate B1 calculated from averages of the measured secondary resonance frequencies of each section satisfy the above lower limit or upper limit. In the interlayer film in which the configuration B is satisfied, when secondary resonance frequencies are measured for three sheets of the laminated glass P having a length in the MD direction of 300 mm, and three sheets of the laminated glass Q having a length in the MD direction of 300 mm prepared from a section of 900 mm in the MD direction, it is most preferred that the change rate B1 calculated from the measured secondary resonance frequencies of each section respectively satisfy the above lower limit or upper limit.

A secondary resonance frequency ($P_B$) of the laminated glass P is preferably 600 Hz or more, more preferably 700 Hz or more, further preferably 720 Hz or more, especially preferably 760 Hz or more, and is preferably 1000 Hz or less, more preferably 900 Hz or less, further preferably 840 Hz or less. When the secondary resonance frequency ($P_B$) is the above lower limit or more and the above upper limit or less, it is possible to further enhance the sound insulating property of the laminated glass. A range of the secondary resonance frequency ($P_B$) of the laminated glass P can be set by appropriately selecting the above upper limit value and the above lower limit value.

A secondary resonance frequency ($Q_B$) of the laminated glass Q is preferably 600 Hz or more, more preferably 700 Hz or more, further preferably 720 Hz or more, especially preferably 760 Hz or more, and is preferably 1000 Hz or less, more preferably 900 Hz or less, further preferably 840 Hz or less. When the secondary resonance frequency ($Q_B$) is the above lower limit or more and the above upper limit or less, it is possible to further enhance the sound insulating property of

the laminated glass. A range of the secondary resonance frequency ($Q_B$) of the laminated glass Q can be set by appropriately selecting the above upper limit value and the above lower limit value.

The change rate B2 is preferably more than 0%, more preferably 1% or more, still more preferably 1.8% or more, further preferably 2% or more, especially preferably 3% or more, most preferably 4% or more, and is preferably 9% or less, more preferably 8% or less, still more preferably 7.5% or less, further preferably 7% or less, especially preferably 6% or less. When the change rate the change rate B2 is more than the above lower limit or the above lower limit or more, it is possible to effectively suppress the generation of off-cuts in production of the interlayer film. When the change rate B2 is the above upper limit or less, it is possible to exert the effect of the present invention more effectively. The range of the change rate B2 can be set by appropriately selecting the upper limit value and the lower limit value.

In the interlayer film in which the configuration B is satisfied, it is preferred that the change rate B2 satisfies the aforementioned lower limit or upper limit in at least part of region in the MD direction. In the interlayer film in which the configuration B is satisfied, when secondary resonance frequencies are measured for the laminated glass R having a length in the MD direction of 300 mm, and the laminated glass S having a length in the MD direction of 300 mm, it is more preferred that the change rate B2 satisfy the above lower limit or upper limit. In the interlayer film in which the configuration B is satisfied, when secondary resonance frequencies are measured for two sheets of the laminated glass R having a length in the MD direction of 300 mm, and two sheets of the laminated glass S having a length in the MD direction of 300 mm prepared from a section of 600 mm in the MD direction, it is further preferred that the change rate B2 calculated from averages of the measured secondary resonance frequencies of each section satisfy the above lower limit or upper limit. In the interlayer film in which the configuration B is satisfied, when secondary resonance frequencies are measured for three sheets of the laminated glass R having a length in the MD direction of 300 mm, and three sheets of the laminated glass S having a length in the MD direction of 300 mm prepared from a section of 900 mm in the MD direction, it is especially preferred that the change rate B2 calculated from averages of the measured secondary resonance frequencies of each section satisfy the above lower limit or upper limit. In the interlayer film in which the configuration B is satisfied, when secondary resonance frequencies are measured for three sheets of the laminated glass R having a length in the MD direction of 300 mm, and three sheets of the laminated glass S having a length in the MD direction of 300 mm prepared from a section of 900 mm in the MD direction, it is most preferred that the change rate B2 calculated from the measured secondary resonance frequencies of each section respectively satisfy the above lower limit or upper limit.

A secondary resonance frequency ($R_B$) of the laminated glass R is preferably 600 Hz or more, more preferably 700 Hz or more, further preferably 720 Hz or more, especially preferably 760 Hz or more, and is preferably 1000 Hz or less, more preferably 900 Hz or less, further preferably 840 Hz or less. When the secondary resonance frequency ($R_B$) is the above lower limit or more and the above upper limit or less, it is possible to further enhance the sound insulating property of the laminated glass. A range of the secondary resonance frequency ($R_B$) of the laminated glass R can be set by appropriately selecting the above upper limit value and the above lower limit value.

A secondary resonance frequency ($S_B$) of the laminated glass S is preferably 600 Hz or more, more preferably 700 Hz or more, further preferably 720 Hz or more, especially preferably 760 Hz or more, and is preferably 1000 Hz or less, more preferably 900 Hz or less, further preferably 840 Hz or less. When the secondary resonance frequency ($S_B$) is the above lower limit or more and the above upper limit or less, it is possible to further enhance the sound insulating property of the laminated glass. A range of the secondary resonance frequency ($S_B$) of the laminated glass S can be set by appropriately selecting the above upper limit value and the above lower limit value.

Secondary resonance frequencies and secondary loss coefficients of the laminated glasses P, Q, R, S can be measured in the following manner. Secondary resonance frequencies and secondary loss coefficients of the laminated glasses P, Q, R, S can be measured at the same time.

The laminated glasses P, Q, R, S are stored in an environment at a temperature of 23 ± 2°C and a humidity of 25 ± 5% for four weeks. The laminated glasses P, Q, R, S after storage are vibrated with a vibration generator for damping test ("Pertable Vibration Exciter Type 4809" available from Spectris Co., Ltd., or equivalent thereof) in a constant temperature bath at 20°C. The obtained vibration characteristics are amplified with a mechanical impedance measuring device ("75 VA Power Amplifier Type 2718" available from Spectris Co., Ltd., or equivalent thereof), and vibration spectra are FFT analyzed to determine a secondary resonance frequency and a secondary loss coefficient. As analysis software, "PULSE LabShop" available from Spectris Co., Ltd. (or equivalent thereof) can be used.

Examples of a method of desirably obtaining an interlayer film in which the configuration A or the configuration B is satisfied include (1) a method of cutting a predetermined position from an end in the TD direction in an interlayer film (interlayer film before cutting) produced by extrusion molding, and (2) a method of obtaining an interlayer film that satisfies later-described configuration C.

Hereinafter, specific embodiments of the present invention will be described with reference to the drawings.

Fig. 1 is a sectional view schematically showing an interlayer film for laminated glass in accordance with a first embodiment of the present invention. In Fig. 1, a section in the thickness direction of an interlayer film 11 is shown.

The interlayer film 11 shown in Fig. 1 is a multi-layered interlayer film having a two or more-layer structure. The interlayer film 11 is used for obtaining laminated glass. The interlayer film 11 is an interlayer film for laminated glass. The

interlayer film 11 includes a first layer 1, a second layer 2, and a third layer 3. The second layer 2 is arranged on a first surface 1a of the first layer 1 and to be layered thereon. The third layer 3 is arranged on a second surface 1b opposite to the first surface 1a of the first layer 1 and to be layered thereon. The first layer 1 is an intermediate layer. Each of the second layer 2 and the third layer 3 is a protective layer and is a surface layer in the present embodiment. The first layer 1 is arranged between the second layer 2 and the third layer 3 and to be sandwiched therebetween. Accordingly, the interlayer film 11 has a multilayer structure (second layer 2/first layer 1/third layer 3) in which the second layer 2, the first layer 1, and the third layer 3 are layered in this order.

The interlayer film 11 has a first end 11a and a second end 11b. The first end 11a and the second end 11b are both ends facing each other in the TD direction of the interlayer film 11. In Fig. 1, the right and left direction is the TD direction, and the front and back direction is the MD direction.

An end surface of the first end 11a has an end surface of the first layer 1, an end surface of the second layer 2, and an end surface of the third layer 3. An end surface of the first end 11a consists of an end surface of the first layer 1, an end surface of the second layer 2, and an end surface of the third layer 3. An end surface of the second end 11b has an end surface of the first layer 1, an end surface of the second layer 2, and an end surface of the third layer 3. An end surface of the second end 11b consists of an end surface of the first layer 1, an end surface of the second layer 2, and an end surface of the third layer 3.

The interlayer film 11 is an interlayer film having a rectangular sectional shape in the thickness direction. The thickness of the interlayer film 11 is approximately uniform. Thickness of the interlayer film 11 in the first end 11a is identical to thickness of the interlayer film 11 in the second end 11b. The first layer 1 has a region having an increasing thickness, a region having a uniform thickness, and a region having a decreasing thickness in this order from the first end 11a toward the second end 11b. The second layer 2 and the third layer 3 each have a region having a decreasing thickness, a region having a uniform thickness, and a region having an increasing thickness in this order from the first end 11a toward the second end 11b.

A part P of the interlayer film 11 from a position of 0 mm to a position of 25 mm from the first end 11a toward the second end 11b is arranged between two sheets of 2.0 mm-thick green glass, and thus the laminated glass P can be obtained. A part Q of the interlayer film 11 from a position of 100 mm to a position of 125 mm from the first end 11a toward the second end 11b is arranged between two sheets of 2.0 mm-thick green glass, and thus the laminated glass Q can be obtained. A part R of the interlayer film 11 from a position of 0 mm to a position of 25 mm from the second end 11b toward the first end 11a is arranged between two sheets of 2.0 mm-thick green glass, and thus the laminated glass R can be obtained. A part S of the interlayer film 11 from a position of 100 mm to a position of 125 mm from the second end 11b toward the first end 11a is arranged between two sheets of 2.0 mm-thick green glass, and thus the laminated glass S can be obtained.

In the interlayer film 11, the aforementioned configuration A or the aforementioned configuration B is satisfied.

In this connection, other layers may be arranged between the second layer 2 and the first layer 1 and between the first layer 1 and the third layer 3, respectively. Examples of other layers include a layer containing polyethylene terephthalate and the like. It is preferred that the second layer 2 and the first layer 1, and the first layer 1 and the third layer 3 be directly layered, respectively.

Fig. 2 is a sectional view schematically showing an interlayer film for laminated glass in accordance with a second embodiment of the present invention. In Fig. 2, a section in the thickness direction of an interlayer film 11A is shown.

The interlayer film 11A shown in Fig. 2 is a multi-layered interlayer film having a two or more-layer structure. The interlayer film 11A is used for obtaining laminated glass. The interlayer film 11A is an interlayer film for laminated glass. The interlayer film 11A includes a first layer 1A, a second layer 2A, and a third layer 3A. The second layer 2A is arranged on a first surface 1Aa side of the first layer 1A and to be layered thereon. The third layer 3A is arranged on a second surface 1Ab side at the opposite side of the first surface 1Aa of the first layer 1A and to be layered thereon. The first layer 1A is an intermediate layer. Each of the second layer 2A and the third layer 3A is a protective layer and is a surface layer in the present embodiment. The first layer 1A is arranged between the second layer 2A and the third layer 3A and to be sandwiched therebetween. Accordingly, the interlayer film 11A has a multilayer structure (second layer 2A/first layer 1A/third layer 3A) in which the second layer 2A, the first layer 1A, and the third layer 3A are layered in this order.

The interlayer film 11A has a first end 11a and a second end 11b. The first end 11a and the second end 11b are both ends facing each other in the TD direction of the interlayer film 11A. In Fig. 2, the right and left direction is the TD direction, and the front and back direction is the MD direction.

An end surface of the first end 11a has an end surface of the first layer 1A, an end surface of the second layer 2A, and an end surface of the third layer 3A. An end surface of the first end 11a consists of an end surface of the first layer 1A, an end surface of the second layer 2A, and an end surface of the third layer 3A. An end surface of the second end 11b has an end surface of the first layer 1A, an end surface of the second layer 2A, and an end surface of the third layer 3A. An end surface of the second end 11b consists of an end surface of the first layer 1A, an end surface of the second layer 2A, and an end surface of the third layer 3A.

The interlayer film 11A is an interlayer film having a wedge-like sectional shape in the thickness direction. The thickness of the interlayer film 11A is not uniform. The thickness of the interlayer film 11A in the first end 11a is different from

the thickness of the interlayer film 11A in the second end 11b. The interlayer film 11A in the second end 11b is larger than the thickness of the interlayer film 11A in the first end 11a. The first layer 1A has a region having an increasing thickness, a region having a uniform thickness, and a region having a decreasing thickness in this order from the first end 11a toward the second end 11b. The second layer 2A and the third layer 3A each have a first region having an increasing thickness, a second region having an increasing thickness, and a third region having an increasing thickness in this order from the first end 11a toward the second end 11b. An increment in thickness of the second layer 2A in the first region is different from an increment in thickness of the second layer 2A in the second region. An increment in thickness of the second layer 2A in the second region is different from an increment in thickness of the second layer 2A in the third region. An increment in thickness of the third layer 3A in the first region is different from an increment in thickness of the third layer 3A in the second region. An increment in thickness of the third layer 3A in the second region is different from an increment in thickness of the third layer 3A in the third region.

A part P of the interlayer film 11A from a position of 0 mm to a position of 25 mm from the first end 11a toward the second end 11b is arranged between two sheets of 2.0 mm-thick green glass, and thus the laminated glass P can be obtained. A part Q of the interlayer film 11A from a position of 100 mm to a position of 125 mm from the first end 11a toward the second end 11b is arranged between two sheets of 2.0 mm-thick green glass, and thus the laminated glass Q can be obtained. A part R of the interlayer film 11A from a position of 0 mm to a position of 25 mm from the second end 11b toward the first end 11a is arranged between two sheets of 2.0 mm-thick green glass, and thus the laminated glass R can be obtained. A part S of the interlayer film 11A from a position of 100 mm to a position of 125 mm from the second end 11b toward the first end 11a is arranged between two sheets of 2.0 mm-thick green glass, and thus the laminated glass S can be obtained.

In the interlayer film 11A, the aforementioned configuration A or the aforementioned configuration B is satisfied.

The sectional shape in the thickness direction of the interlayer film may be a rectangular shape, or may be a wedge-like shape. The wedge-like shape may be such a shape that the thickness changes at a constant ratio from the one end toward the other end of the interlayer film, and may be such a shape that the thickness changes at an inconstant ratio from the one end toward the other end of the interlayer film. The thickness of the interlayer film in the first end and the thickness of the interlayer film in the second end may be the same or different from each other. The thickness of the interlayer film in the first end may be larger than or may be smaller than the thickness of the interlayer film in the second end.

The sectional shape in the thickness direction of the first layer may be a rectangular shape, or may be a wedge-like shape. The thickness of the first layer in the first end and the thickness of the first layer in the second end may be the same or different from each other. The thickness of the first layer in the first end may be larger than or may be smaller than the thickness of the first layer in the second end.

The sectional shape in the thickness direction of the second layer may be a rectangular shape, or may be a wedge-like shape. The thickness of the second layer in the first end and the thickness of the second layer in the second end may be the same or different from each other. The thickness of the second layer in the first end may be larger than or may be smaller than the thickness of the second layer in the second end.

The sectional shape in the thickness direction of the third layer may be a rectangular shape, or may be a wedge-like shape. The thickness of the third layer in the first end and the thickness of the third layer in the second end may be the same or different from each other. The thickness of the third layer in the first end may be larger than or may be smaller than the thickness of the third layer in the second end.

The first layer may be a surface layer of the interlayer film or may be an intermediate layer of the interlayer film. When the interlayer film includes a three or more-layer structure, the first layer is an intermediate layer of the interlayer film. The second layer may be a surface layer of the interlayer film or may be an intermediate layer of the interlayer film. It is preferred that the second layer be a surface layer of the interlayer film. The third layer may be a surface layer of the interlayer film or may be an intermediate layer of the interlayer film. It is preferred that the third layer be a surface layer of the interlayer film. It is preferred that each of the second layer and the third layer be a surface layer of the interlayer film.

It is preferred that the interlayer film have layers with mutually different glass transition temperatures. It is preferred that the glass transition temperature of the first layer be different from the glass transition temperature of the second layer. It is preferred that the glass transition temperature of the first layer be different from the glass transition temperature of the third layer. The glass transition temperature of the second layer and the glass transition temperature of the third layer may be the same or different from each other.

From the viewpoint of further enhancing the sound insulating property of the laminated glass, it is preferred that the glass transition temperature of the first layer be lower than the glass transition temperature of the second layer. From the viewpoint of further enhancing the sound insulating property of the laminated glass, it is preferred that the glass transition temperature of the first layer be lower than the glass transition temperature of the third layer. From the viewpoint of further enhancing the sound insulating property of the laminated glass, it is preferred that the first layer be a layer having the lowest glass transition temperature. From the viewpoint of further enhancing the sound insulating property of the laminated glass, it is preferred that the second layer be a layer having the highest glass transition temperature, and it is more preferred that each of the second layer and the third layer be a layer having the highest glass transition temperature.

The glass transition temperature of the layer having the highest glass transition temperature is preferably 32°C or more, more preferably 35°C or more, further preferably 37°C or more, especially preferably more preferably 38°C or more, and is preferably 50°C or less, more preferably 45°C or less, further preferably 40°C or less. When the glass transition temperature is the above lower limit or more, it becomes easy to satisfy the configuration B. When the glass transition temperature is the above lower limit or more, it is possible to further enhance the vibration damping property of the laminated glass. When the glass transition temperature is the above lower limit or more and the above upper limit or less, it is possible to enhance the handleability of the interlayer film, and it is possible to further enhance the sound insulating property of the laminated glass. A range of the glass transition temperature of the layer having the highest glass transition temperature can be set by appropriately selecting the above upper limit value and the above lower limit value.

Glass transition temperature of the first layer is preferably -20°C or more, more preferably -10°C or more, further preferably 0°C or more, and is preferably 20°C or less, more preferably 10°C or less, further preferably 5°C or less. When the glass transition temperature is the above lower limit or more, it becomes easy to satisfy the configuration B. When the glass transition temperature is the above lower limit or more, it is possible to further enhance the vibration damping property of the laminated glass. When the glass transition temperature is the above lower limit or more and the above upper limit or less, it is possible to enhance the handleability of the interlayer film, and it is possible to further enhance the sound insulating property of the laminated glass. A range of the glass transition temperature of the first layer can be set by appropriately selecting the above upper limit value and the above lower limit value.

The glass transition temperature of the second layer is preferably 32°C or more, more preferably 35°C or more, further preferably 37°C or more, especially preferably more preferably 38°C or more, and is preferably 50°C or less, more preferably 45°C or less, further preferably 40°C or less. When the glass transition temperature is the above lower limit or more, it becomes easy to satisfy the configuration B. When the glass transition temperature is the above lower limit or more, it is possible to further enhance the vibration damping property of the laminated glass. When the glass transition temperature is the above lower limit or more and the above upper limit or less, it is possible to enhance the handleability of the interlayer film, and it is possible to further enhance the sound insulating property of the laminated glass. A range of the glass transition temperature of the second layer can be set by appropriately selecting the above upper limit value and the above lower limit value.

The glass transition temperature of the third layer is preferably 32°C or more, more preferably 35°C or more, further preferably 37°C or more, especially preferably more preferably 38°C or more, and is preferably 50°C or less, more preferably 45°C or less, further preferably 40°C or less. When the glass transition temperature is the above lower limit or more, it becomes easy to satisfy the configuration B. When the glass transition temperature is the above lower limit or more, it is possible to further enhance the vibration damping property of the laminated glass. When the glass transition temperature is the above lower limit or more and the above upper limit or less, it is possible to enhance the handleability of the interlayer film, and it is possible to further enhance the sound insulating property of the laminated glass. A range of the glass transition temperature of the third layer can be set by appropriately selecting the above upper limit value and the above lower limit value.

Tanδ at the glass transition temperature of the layer having the lowest glass transition temperature is preferably 1.2 or more, more preferably 1.3 or more, further preferably 1.4 or more, especially preferably 2.0 or more. When the tanδ is the above lower limit or more, it is possible to further enhance the vibration damping property of the laminated glass. The tanδ at the glass transition temperature of the layer having the lowest glass transition temperature may be 4.0 or less, and may be 3.0 or less. A range of the tanδ at the glass transition temperature of the layer having the lowest glass transition temperature can be set by appropriately selecting the above upper limit value and the above lower limit value.

The tanδ at the glass transition temperature of the first layer is preferably 1.2 or more, more preferably 1.3 or more, further preferably 1.4 or more, especially preferably 2.0 or more. When the tanδ is the above lower limit or more, it is possible to further enhance the vibration damping property of the laminated glass. The tanδ at the glass transition temperature of the first layer may be 4.0 or less, and may be 3.0 or less. A range of the tanδ at the glass transition temperature of the first layer can be set by appropriately selecting the above upper limit value and the above lower limit value.

The tanδ at the glass transition temperature of the second layer is preferably 0.40 or more, more preferably 0.45 or more, further preferably 0.50 or more. When the tanδ is the above lower limit or more, it is possible to further enhance the vibration damping property of the laminated glass. The tanδ at the glass transition temperature of the second layer may be 4.0 or less, and may be 3.0 or less. A range of the tanδ at the glass transition temperature of the second layer can be set by appropriately selecting the above upper limit value and the above lower limit value.

The tanδ at the glass transition temperature of the third layer is preferably 0.40 or more, more preferably 0.45 or more, further preferably 0.50 or more. When the tanδ is the above lower limit or more, it is possible to further enhance the vibration damping property of the laminated glass. The tanδ at the glass transition temperature of the third layer may be 4.0 or less, and may be 3.0 or less. A range of the tanδ at the glass transition temperature of the third layer can be set by appropriately selecting the above upper limit value and the above lower limit value.

The glass transition temperature and the tanδ are determined by measurement of viscoelasticity. The viscoelasticity measurement is conducted specifically in the following manner.

The interlayer film is sandwiched between two sheets of 100 μm-thick polyethylene terephthalate films (PET film, for example, "Lumirror H10" available from TORAY INDUSTRIES, INC.) to obtain a laminate. The obtained laminate is sandwiched between two sheets of 2.0 mm-thick green glass and put into a rubber bag, which is then degassed for 20 minutes with a degree of vacuum of 0.08 MPa. After degassing, the laminate in the degassed condition is transferred into an oven, and vacuum-pressed by retention at 90°C for 30 minutes, and thus the laminate is preliminarily press-bonded. After the preliminary press-bonding, the laminate is subjected to press-bonding for 20 minutes under conditions of 140°C and a pressure of 1.3 MPa in an autoclave to obtain a test piece. The test piece is stored for four weeks in an environment at a room temperature of 23 ± 2°C and a humidity of 25 ± 5%. After storage, the green glass and the PET film are delaminated, and viscoelasticity is measured using a viscoelasticity measuring device ("ARES-G2" available from TA Instruments, or equivalent thereof). A parallel plate with a diameter of 8 mm is used as a jig, and the measurement is performed in a shearing mode under the condition in which the temperature is decreased from 100°C to -20°C at a temperature decreasing rate of 3°C/minute and under the condition of a frequency of 1 Hz and a strain of 1%. In the obtained measurement results, the peak temperature of loss tangent is defined as glass transition temperature Tg (°C), and the value of loss tangent at the glass transition temperature is defined as tanδ at the glass transition temperature. When the interlayer film has a plurality of layers, the test piece is prepared and measured in the integrated state without being delaminated, and from the measurement result, a peak of tanδ coming from each layer and a glass transition temperature and the like are read. In the case of laminated glass, after cooling the laminated glass with liquid nitrogen or the like, the lamination glass members and the interlayer film are delaminated, and the test piece is prepared in the following manner using the delaminated interlayer film. Using the test piece, the viscoelasticity measurement is conducted.

The end surface of the first end preferably has an end surface of the layer having the lowest glass transition temperature, and more preferably has an end surface of the layer having the lowest glass transition temperature and an end surface of the layer having the highest glass transition temperature. The end surface of the second end preferably has an end surface of the layer having the lowest glass transition temperature, and more preferably has an end surface of the layer having the lowest glass transition temperature and an end surface of the layer having the highest glass transition temperature. In this case, it becomes easy to preferably satisfy the configuration A and the configuration B.

The end surface of the first end preferably has an end surface of the first layer, more preferably has an end surface of the first layer and an end surface of the second layer, and further preferably has an end surface of the first layer, an end surface of the second layer and an end surface of the third layer. The end surface of the second end preferably has an end surface of the first layer, more preferably has an end surface of the first layer and an end surface of the second layer, and further preferably has an end surface of the first layer, an end surface of the second layer and an end surface of the third layer. In this case, it becomes easy to preferably satisfy the configuration A and the configuration B.

From the viewpoint of preferably satisfying the configuration A and the configuration B, it is preferred that the interlayer film have the following configuration C.

Configuration C: change rate C1 represented by formula (C1) below is more than 0% and 50% or less, and change rate C2 represented by formula (C2) below is more than 0% and 50% or less.

$$\text{Change rate C1 } (\%) = (|T_P - T_Q|/T_Q) \times 100 \quad ...(C1)$$

$T_P$: a ratio of thickness of the layer having the lowest glass transition temperature at a position of 12.5 mm from the first end toward the second end to thickness of the interlayer film at a position of 12.5 mm from the first end toward the second end

$T_Q$: a ratio of thickness of the layer having the lowest glass transition temperature at a position of 112.5 mm from the first end toward the second end to thickness of the interlayer film at a position of 112.5 mm from the first end toward the second end

$$\text{Change rate C2 } (\%) = (|T_R - T_S|/T_S) \times 100 \quad ...(C2)$$

$T_R$: a ratio of thickness of the layer having the lowest glass transition temperature at a position of 12.5 mm from the second end toward the first end to thickness of the interlayer film at a position of 12.5 mm from the second end toward the first end

$T_S$: a ratio of thickness of the layer having the lowest glass transition temperature at a position of 112.5 mm from the second end toward the first end to thickness of the interlayer film at a position of 112.5 mm from the second end toward the first end

The change rate C1 is preferably more than 0%, more preferably 1% or more, still more preferably 5% or more,

further preferably 10% or more, especially preferably 14.3% or more, and is preferably 50% or less, more preferably 40% or less, still more preferably 36% or less, further preferably 30% or less, especially preferably 20% or less. In this case, it becomes easy to preferably satisfy the configuration A and the configuration B. The range of the change rate C1 can be set by appropriately selecting the upper limit value and the lower limit value.

A ratio of thickness of the layer having the lowest glass transition temperature at a position of 12.5 mm from the first end toward the second end to thickness of the interlayer film at a position of 12.5 mm from the first end toward the second end is defined as a ratio ($T_p$). The ratio ($T_p$) is "(the thickness of the layer having the lowest glass transition temperature at a position of 12.5 mm from the first end toward the second end)/(the thickness of the interlayer film at a position of 12.5 mm from the first end toward the second end)". The ratio ($T_P$) is preferably 0.05 or more, more preferably 0.07 or more, further preferably 0.09 or more, especially preferably 0.13 or more, and is preferably 0.27 or less, more preferably 0.20 or less, further preferably 0.16 or less. When the ratio ($T_P$) is the above lower limit or more, it is possible to further enhance the sound insulating property of the laminated glass. When the ratio ($T_P$) is the above upper limit or less, it is possible to make the mechanical strength of the interlayer film still higher. Also, in producing laminated glass, it is possible to suppress unintended misalignment of the glass under high-temperature conditions such as an autoclave or the like. The range of the ratio ($T_P$) can be set by appropriately selecting the upper limit value and the lower limit value.

A ratio of thickness of the layer having the lowest glass transition temperature at a position of 112.5 mm from the first end toward the second end to thickness of the interlayer film at a position of 112.5 mm from the first end toward the second end is defined as a ratio ($T_Q$). The ratio ($T_Q$) is "(the thickness of the layer having the lowest glass transition temperature at a position of 112.5 mm from the first end toward the second end)/(the thickness of the interlayer film at a position of 112.5 mm from the first end toward the second end)". The ratio ($T_Q$) is preferably 0.05 or more, more preferably 0.07 or more, further preferably 0.09 or more, especially preferably 0.13 or more, and is preferably 0.27 or less, more preferably 0.20 or less, further preferably 0.16 or less. When the ratio ($T_Q$) is the above lower limit or more, it is possible to further enhance the sound insulating property of the laminated glass. When the ratio ($T_Q$) is the above upper limit or less, it is possible to make the mechanical strength of the interlayer film still higher. Also, in producing laminated glass, it is possible to suppress unintended misalignment of the glass under high-temperature conditions such as an autoclave or the like. The range of the ratio ($T_Q$) can be set by appropriately selecting the upper limit value and the lower limit value.

The change rate C2 is preferably more than 0%, more preferably 1% or more, still more preferably 5% or more, further preferably 10% or more, especially preferably 14.3% or more, and is preferably 50% or less, more preferably 40% or less, still more preferably 36% or less, further preferably 30% or less, especially preferably 20% or less. In this case, it becomes easy to preferably satisfy the configuration A and the configuration B. The range of the change rate C2 can be set by appropriately selecting the upper limit value and the lower limit value.

A ratio of thickness of the layer having the lowest glass transition temperature at a position of 12.5 mm from the second end toward the first end to thickness of the interlayer film at a position of 12.5 mm from the second end toward the first end is defined as a ratio ($T_R$). The ratio ($T_R$) is "(the thickness of the layer having the lowest glass transition temperature at a position of 12.5 mm from the second end toward the first end)/(the thickness of the interlayer film at a position of 12.5 mm from the second end toward the first end)". The ratio ($T_R$) is preferably 0.05 or more, more preferably 0.07 or more, further preferably 0.09 or more, especially preferably 0.13 or more, and is preferably 0.27 or less, more preferably 0.20 or less, further preferably 0.16 or less. When the ratio ($T_R$) is the above lower limit or more, it is possible to further enhance the sound insulating property of the laminated glass. When the ratio ($T_R$) is the above upper limit or less, it is possible to make the mechanical strength of the interlayer film still higher. Also, in producing laminated glass, it is possible to suppress unintended misalignment of the glass under high-temperature conditions such as an autoclave or the like. The range of the ratio ($T_R$) can be set by appropriately selecting the upper limit value and the lower limit value.

A ratio of thickness of the layer having the lowest glass transition temperature at a position of 112.5 mm from the second end toward the first end to thickness of the interlayer film at a position of 112.5 mm from the second end toward the first end is defined as a ratio ($T_S$). The ratio ($T_S$) is "(the thickness of the layer having the lowest glass transition temperature at a position of 112.5 mm from the second end toward the first end)/(the thickness of the interlayer film at a position of 112.5 mm from the second end toward the first end)". The ratio ($T_S$) is preferably 0.05 or more, more preferably 0.07 or more, further preferably 0.09 or more, especially preferably 0.13 or more, and is preferably 0.27 or less, more preferably 0.20 or less, further preferably 0.16 or less. When the ratio ($T_S$) is the above lower limit or more, it is possible to further enhance the sound insulating property of the laminated glass. When the ratio ($T_S$) is the above upper limit or less, it is possible to make the mechanical strength of the interlayer film still higher. Also, in producing laminated glass, it is possible to suppress unintended misalignment of the glass under high-temperature conditions such as an autoclave or the like. The range of the ratio ($T_S$) can be set by appropriately selecting the upper limit value and the lower limit value.

The maximum thickness of the interlayer film is preferably 0.15 mm or more, more preferably 0.25 mm or more, further preferably 0.5 mm or more, especially preferably 0.8 mm or more and is preferably 4 mm or less, more preferably 3.8 mm or less, further preferably 3.6 mm or less. The range of the maximum thickness of the interlayer film can be set by appropriately selecting the upper limit value and the lower limit value.

From the viewpoint of the practical aspect and the viewpoint of sufficiently enhancing the adhesive force and the

penetration resistance, the maximum thickness of a surface layer in the interlayer film is preferably 20 μm or more, more preferably 25 μm or more, further preferably 50 μm or more, and is preferably 2000 μm or less, more preferably 1800 μm or less. A range of the maximum thickness of the surface layer in the interlayer film can be set by appropriately selecting the above upper limit value and the above lower limit value.

From the viewpoint of the practical aspect and the viewpoint of sufficiently enhancing the penetration resistance, the maximum thickness of the layer arranged between two surface layers (intermediate layer) in the interlayer film is preferably 40 μm or more, more preferably 60 μm or more, further preferably 80 μm or more and is preferably 200 μm or less, more preferably 150 μm or less. A range of the maximum thickness of the layer arranged between the two surface layers (intermediate layer) in the interlayer film can be set by appropriately selecting the above upper limit value and the above lower limit value.

When the thickness of the interlayer film in the first end is different from the thickness of the interlayer film in the second end, the thickness of the interlayer film in the second end is preferably larger than the thickness of the interlayer film in the first end, and is preferably larger by 0.01 mm or more, further preferably larger by 0.05 mm or more, especially preferably larger by 0.1 mm or more, and is preferably larger by 5 mm or less, more preferably larger by 4.8 mm or less, further preferably larger by 4.6 mm or less. The difference between the thickness of the interlayer film in the second end and the thickness of the interlayer film in the first end can be set by appropriately selecting the above upper limit value and the above lower limit value.

From the viewpoint of better display when used in laminated glass which is a head-up display (HUD), it is preferred that the interlayer film have a part with a sectional shape of wedge-like shape in the thickness direction.

In order to suppress double images, the wedge angle θ of the interlayer film can be appropriately set according to the fitting angle of the laminated glass. The wedge angle θ is a wedge angle of the interlayer film as a whole.

The wedge angle θ of the interlayer film is an interior angle formed at the intersection point between a straight line connecting surface parts on the one side of the interlayer film (first surface part) of the maximum thickness part and the minimum thickness part in the interlayer film, and a straight line connecting surface parts of the other side of the interlayer film (second surface part) of the maximum thickness part and the minimum thickness part in the interlayer film.

When there are a plurality of maximum thickness parts, there are a plurality of minimum thickness parts, the maximum thickness part is located in a certain region, or the minimum thickness part is located in a certain region, the maximum thickness part and the minimum thickness part for determining the wedge angle θ are selected so that the wedge angle θ to be determined is the maximum.

From the viewpoint of suppressing double images more effectively, the wedge angle θ of the interlayer film is preferably 0.05 mrad or more, more preferably 0.1 mrad (0.00575 degrees) or more, further preferably 0.2 mrad (0.0115 degrees) or more. When the wedge angle θ is the above lower limit or more, it is possible to obtain laminated glass suited for cars such as a truck or a bus in which the attachment angle of the windshield is large. The range of the wedge angle θ of the interlayer film can be set by appropriately selecting the later-described upper limit value and the lower limit value.

From the viewpoint of suppressing double images more effectively, the wedge angle θ of the interlayer film is preferably 2 mrad (0.1146 degrees) or less, and more preferably 0.7 mrad (0.0401 degrees) or less. When the wedge angle θ is the above upper limit or less, it is possible to obtain laminated glass suited for cars such as a sports car in which the attachment angle of the windshield is small. The range of the wedge angle θ of the interlayer film can be set by appropriately selecting the above-described upper limit value and the lower limit value.

As a measuring device for use for measurement of a wedge angle (θ) of the interlayer film, and a thickness of the interlayer film, a contact type thickness meter "TOF-4R" (available from Yamabun Electronics Co., Ltd.) or the like can be recited.

Measurement of the thickness of the interlayer film is conducted such that the distance is the shortest from the first end toward the second end by using the above-described measuring device at a film conveyance speed of 2.15 mm/minute to 2.25 mm/minute.

Examples of the measuring device for use in measurement of thickness of each layer of the interlayer film include "SE-3000" (available from SELMIC Corporation) and the like.

Thickness of each layer of the interlayer film can be measured in the following manner. The interlayer film is cut at a measuring position in the thickness direction with a razor, a cutter, or the like. After observing the cut plane of the interlayer film with the aforementioned measuring device, thickness of each layer is measured by means of calculation software in the attached software.

As a measuring device for use for measurement of a wedge angle (θ) of the interlayer film, a thickness of the interlayer film, and a thickness of each layer of the interlayer film after the interlayer film is made into laminated glass, a non-contact type multilayer film thickness measuring device "OPTIGAUGE" (available from Lumetrics, Inc.) or the like can be recited. When the measuring device is used, it is possible to measure the thickness of the interlayer film while the interlayer film is in the laminated glass.

The interlayer film is suitably used for laminated glass serving as a head-up display (HUD). It is preferred that the interlayer film be an interlayer film for HUD. It is preferred that the interlayer film have a region for display corresponding to a

display region of HUD.

Hereinafter, the details of the first layer, the second layer and the third layer which constitute the interlayer film according to the present invention, and the details of each ingredient contained in the first layer, the second layer and the third layer will be described.

(Resin)

It is preferred that the interlayer film contain a resin (hereinafter, sometimes described as a resin (0)). It is preferred that the interlayer film contain a thermoplastic resin (hereinafter, sometimes described as a thermoplastic resin (0)) as the resin (0). It is preferred that the interlayer film contain a polyvinyl acetal resin (hereinafter, sometimes described as a polyvinyl acetal resin (0)) as the thermoplastic resin (0). It is preferred that the first layer contain a resin (hereinafter, sometimes described as a resin (1)). It is preferred that the first layer contain a thermoplastic resin (hereinafter, sometimes described as a thermoplastic resin (1)) as the resin (1). It is preferred that the resin in the first layer be a thermoplastic resin. It is preferred that the first layer contain a polyvinyl acetal resin (hereinafter, sometimes described as a polyvinyl acetal resin (1)) as the thermoplastic resin (1). It is preferred that the second layer contain a resin (hereinafter, sometimes described as a resin (2)). It is preferred that the second layer contain a thermoplastic resin (hereinafter, sometimes described as a thermoplastic resin (2)) as the resin (2). It is preferred that the resin in the second layer be a thermoplastic resin. It is preferred that the second layer contain a polyvinyl acetal resin (hereinafter, sometimes described as a polyvinyl acetal resin (2)) as the thermoplastic resin (2). It is preferred that the third layer contain a resin (hereinafter, sometimes described as a resin (3)). It is preferred that the third layer contain a thermoplastic resin (hereinafter, sometimes described as a thermoplastic resin (3)) as the resin (3). It is preferred that the resin in the third layer be a thermoplastic resin. It is preferred that the third layer contain a polyvinyl acetal resin (hereinafter, sometimes described as a polyvinyl acetal resin (3)) as the thermoplastic resin (3). The resin (1), the resin (2), and the resin (3) may be the same as or different from one another. The thermoplastic resin (1), the thermoplastic resin (2), and the thermoplastic resin (3) may be the same or different from one another. For still higher sound insulating property, it is preferred that the resin (1) be different from the resin (2) and the resin (3). For still higher sound insulating property, it is preferred that the thermoplastic resin (1) be different from the thermoplastic resin (2) and the thermoplastic resin (3). Each of the polyvinyl acetal resin (1), the polyvinyl acetal resin (2), and the polyvinyl acetal resin (3) may be the same or different from one another. For still higher sound insulating property, it is preferred that the polyvinyl acetal resin (1) be different from the polyvinyl acetal resin (2) and the polyvinyl acetal resin (3). One kind of each of the resin (0), the resin (1), the resin (2) and the resin (3) may be used alone, and two or more kinds thereof may be used in combination. One kind of each of the thermoplastic resin (0), the thermoplastic resin (1), the thermoplastic resin (2), and the thermoplastic resin (3) may be used alone and two or more kinds thereof may be used in combination. One kind of each of the polyvinyl acetal resin (0), the polyvinyl acetal resin (1), the polyvinyl acetal resin (2), and the polyvinyl acetal resin (3) may be used alone and two or more kinds thereof may be used in combination.

Examples of the resin include cured products of thermosetting resins, and thermoplastic resins.

Examples of the thermoplastic resin include a polyvinyl acetal resin, an ethylene-vinyl acetate copolymer resin, an ethylene-acrylic acid copolymer resin, a polyurethane resin, a (meth)acrylic resin, a polyolefin resin, an ionomer resin, and a polyvinyl alcohol resin, and the like. Thermoplastic resins other than these may be used.

For example, the polyvinyl acetal resin can be produced by acetalizing polyvinyl alcohol (PVA) with an aldehyde. It is preferred that the polyvinyl acetal resin be an acetalized product of polyvinyl alcohol. The polyvinyl alcohol can be obtained, for example, by saponifying polyvinyl acetate. The saponification degree of the polyvinyl alcohol generally lies within the range of 70% by mole to 99.9% by mole.

The average polymerization degree of the polyvinyl alcohol (PVA) is preferably 200 or more, more preferably 500 or more, even more preferably 1500 or more, further preferably 1600 or more, especially preferably 2600 or more, most preferably 2700 or more and is preferably 5000 or less, more preferably 4000 or less, further preferably 3500 or less. When the average polymerization degree is the above-described lower limit or more, the penetration resistance of the laminated glass is further enhanced. When the average polymerization degree is the aforementioned upper limit or less, formation of an interlayer film is facilitated. The range of the average polymerization degree can be set by appropriately selecting the upper limit value and the lower limit value.

The average polymerization degree of the polyvinyl alcohol is determined by a method in accordance with JIS K6726 "Testing methods for polyvinyl alcohol".

The number of carbon atoms of the acetal group contained in the polyvinyl acetal resin is not particularly limited. The aldehyde used at the time of producing the polyvinyl acetal resin is not particularly limited. The number of carbon atoms of the acetal group in the polyvinyl acetal resin is preferably 3 to 5, more preferably 3 or 4. When the number of carbon atoms of the acetal group in the polyvinyl acetal resin is 3 or more, the glass transition temperature of the interlayer film is sufficiently lowered. The number of carbon atoms of the acetal group in the polyvinyl acetal resin may be 4 or 5.

The aldehyde is not particularly limited. In general, an aldehyde having 1 to 10 carbon atoms is suitably used.

Examples of the aldehyde having 1 to 10 carbon atoms include propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, benzaldehyde, and the like. The aldehyde is preferably propionaldehyde, n-butyraldehyde, isobutyraldehyde, n-hexylaldehyde, or n-valeraldehyde, more preferably propionaldehyde, n-butyraldehyde or isobutyraldehyde, and further preferably n-butyraldehyde. One kind of the aldehyde may be used alone, and two or more kinds thereof may be used in combination.

The content of the hydroxyl group (the amount of hydroxyl groups) of the polyvinyl acetal resin (0) is preferably 15% by mole or more, more preferably 18% by mole or more and is preferably 40% by mole or less, more preferably 35% by mole or less. When the content of the hydroxyl group is the above lower limit or more, the adhesive force of the interlayer film is further enhanced. Moreover, when the content of the hydroxyl group is the above-described upper limit or less, the flexibility of the interlayer film is enhanced and the handling of the interlayer film is facilitated. The range of the content of the hydroxyl group can be set by appropriately selecting the upper limit value and the lower limit value.

A content of the hydroxyl group (the amount of hydroxyl groups) of the polyvinyl acetal resin (1) is preferably 17% by mole or more, more preferably 20% by mole or more, further preferably 22% by mole or more and is preferably 28% by mole or less, more preferably 27% by mole or less, further preferably 25% by mole or less, especially preferably 24% by mole or less. When the content of the hydroxyl group is the above lower limit or more, the mechanical strength of the interlayer film is further enhanced. In particular, when the content of the hydroxyl group of the polyvinyl acetal resin (1) is 20% by mole or more, the resin is high in reaction efficiency and is excellent in productivity, and moreover, when being 28% by mole or less, the sound insulating property of laminated glass is further enhanced. Moreover, when the content of the hydroxyl group is the above-described upper limit or less, the flexibility of the interlayer film is enhanced and the handling of the interlayer film is facilitated. The range of the content of the hydroxyl group can be set by appropriately selecting the upper limit value and the lower limit value.

The content of the hydroxyl group (hydroxyl group amount) of the polyvinyl acetal resin (2) and the polyvinyl acetal resin (3) are preferably 25% by mole or more, more preferably 28% by mole or more, more preferably 30% by mole or more, still more preferably 31.5% by mole or more, further preferably 32% by mole or more, especially preferably 33% by mole or more. The content of the hydroxyl group (hydroxyl group amount) of the polyvinyl acetal resin (2) and the polyvinyl acetal resin (3) is preferably 38% by mole or less, more preferably 37% by mole or less, further preferably 36.5% by mole or less, especially preferably 36% by mole or less. When the content of the hydroxyl group is the above lower limit or more, the adhesive force of the interlayer film is further enhanced. Moreover, when the content of the hydroxyl group is the above-described upper limit or less, the flexibility of the interlayer film is enhanced and the handling of the interlayer film is facilitated. The range of the content of the hydroxyl group can be set by appropriately selecting the upper limit value and the lower limit value.

From the viewpoint of further enhancing the sound insulating property, it is preferred that the content of the hydroxyl group of the polyvinyl acetal resin (1) be lower than the content of the hydroxyl group of the polyvinyl acetal resin (2). From the viewpoint of further enhancing the sound insulating property, it is preferred that the content of the hydroxyl group of the polyvinyl acetal resin (1) be lower than the content of the hydroxyl group of the polyvinyl acetal resin (3). An absolute value of difference between the content of the hydroxyl group of the polyvinyl acetal resin (1) and the content of the hydroxyl group of the polyvinyl acetal resin (2) is defined as absolute value A, and an absolute value of difference between the content of the hydroxyl group of the polyvinyl acetal resin (1) and the content of the hydroxyl group of the polyvinyl acetal resin (3) is defined as absolute value B. From the viewpoint of further enhancing the sound insulating property, each of the absolute value A and the absolute value B is preferably 1% by mole or more, more preferably 5% by mole or more, further preferably 9% by mole or more, especially preferably 10% by mole or more, most preferably 12% by mole or more. Each of the absolute value A and the absolute value B is preferably 20% by mole or less. The range of the absolute value A and the range of the absolute value B can be set by appropriately selecting the upper limit value and the lower limit value.

The content of the hydroxyl group of the polyvinyl acetal resin is a mole fraction, represented in percentage, obtained by dividing the amount of ethylene groups to which the hydroxyl group is bonded by the total amount of ethylene groups in the main chain. For example, the amount of ethylene groups to which the hydroxyl group is bonded can be measured in accordance with JIS K6728 "Testing methods for polyvinyl butyral".

The acetylation degree (the amount of acetyl groups) of the polyvinyl acetal resin (0) is preferably 0.1% by mole or more, more preferably 0.3% by mole or more, further preferably 0.5% by mole or more and is preferably 30% by mole or less, more preferably 25% by mole or less, and further preferably 20% by mole or less. When the acetylation degree is the above lower limit or more, the compatibility between the polyvinyl acetal resin and a plasticizer is enhanced. When the acetylation degree is the aforementioned upper limit or less, the moisture resistance of the interlayer film and laminated glass is enhanced. The range of the acetylation degree can be set by appropriately selecting the upper limit value and the lower limit value.

The acetylation degree (the amount of acetyl groups) of the polyvinyl acetal resin (1) is preferably 0.01% by mole or more, more preferably 0.1% by mole or more, even more preferably 7% by mole or more, further preferably 9% by mole or more and is preferably 30% by mole or less, more preferably 25% by mole or less, further preferably 24% by mole or less,

especially preferably 20% by mole or less. When the acetylation degree is the above lower limit or more, the compatibility between the polyvinyl acetal resin and a plasticizer is enhanced. When the acetylation degree is the aforementioned upper limit or less, the moisture resistance of the interlayer film and laminated glass is enhanced. In particular, when the acetylation degree of the polyvinyl acetal resin (1) is 0.1% by mole or more and is 25% by mole or less, the resulting laminated glass is excellent in penetration resistance. The range of the acetylation degree can be set by appropriately selecting the upper limit value and the lower limit value.

The acetylation degree (acetyl group amount) of each of the polyvinyl acetal resin (2) and the polyvinyl acetal resin (3) is preferably 0.01% by mole or more, more preferably 0.5% by mole or more, and is preferably 10% by mole or less, more preferably 2% by mole or less. When the acetylation degree is the above lower limit or more, the compatibility between the polyvinyl acetal resin and a plasticizer is enhanced. When the acetylation degree is the aforementioned upper limit or less, the moisture resistance of the interlayer film and laminated glass is enhanced. The range of the acetylation degree can be set by appropriately selecting the upper limit value and the lower limit value.

The acetylation degree is a mole fraction, represented in percentage, obtained by dividing the amount of ethylene groups to which the acetyl group is bonded by the total amount of ethylene groups in the main chain. For example, the amount of ethylene groups to which the acetyl group is bonded can be determined in accordance with JIS K6728 "Testing methods for polyvinyl butyral".

The acetalization degree of the polyvinyl acetal resin (0) (the butyralization degree in the case of a polyvinyl butyral resin) is preferably 60% by mole or more, more preferably 63% by mole or more and is preferably 85% by mole or less, more preferably 75% by mole or less, further preferably 70% by mole or less. When the acetalization degree is the above lower limit or more, the compatibility between the polyvinyl acetal resin and a plasticizer is enhanced. When the acetalization degree is the above-described upper limit or less, the reaction time required for producing the polyvinyl acetal resin is shortened. The range of the acetalization degree can be set by appropriately selecting the upper limit value and the lower limit value.

The acetalization degree of the polyvinyl acetal resin (1) (the butyralization degree in the case of a polyvinyl butyral resin) is preferably 47% by mole or more, more preferably 60% by mole or more, and is preferably 85% by mole or less, more preferably 80% by mole or less, further preferably 75% by mole or less. When the acetalization degree is the above lower limit or more, the compatibility between the polyvinyl acetal resin and a plasticizer is enhanced. When the acetalization degree is the above-described upper limit or less, the reaction time required for producing the polyvinyl acetal resin is shortened. The range of the acetalization degree can be set by appropriately selecting the upper limit value and the lower limit value.

The acetalization degree of the polyvinyl acetal resin (2) and the polyvinyl acetal resin (3) (the butyralization degree in the case of a polyvinyl butyral resin) is preferably 55% by mole or more and more preferably 60% by mole or more and is preferably 75% by mole or less and more preferably 71% by mole or less. When the acetalization degree is the above lower limit or more, the compatibility between the polyvinyl acetal resin and a plasticizer is enhanced. When the acetalization degree is the above-described upper limit or less, the reaction time required for producing the polyvinyl acetal resin is shortened. The range of the acetalization degree can be set by appropriately selecting the upper limit value and the lower limit value.

The acetalization degree is determined in the following manner. From the total amount of the ethylene group in the main chain, the amount of the ethylene group to which the hydroxyl group is bonded and the amount of the ethylene group to which the acetyl group is bonded are subtracted. The obtained value is divided by the total amount of the ethylene group in the main chain to obtain a mole fraction. The mole fraction represented in percentage is the acetalization degree.

In this connection, it is preferred that the content of the hydroxyl group (the amount of hydroxyl groups), the acetalization degree (the butyralization degree) and the acetylation degree be calculated from the results determined by a method in accordance with JIS K6728 "Testing methods for polyvinyl butyral". In this context, a method in accordance with ASTM D1396-92 may be used. When the polyvinyl acetal resin is a polyvinyl butyral resin, the content of the hydroxyl group (the amount of hydroxyl groups), the acetalization degree (the butyralization degree) and the acetylation degree can be calculated from the results measured by a method in accordance with JIS K6728 "Testing methods for polyvinyl butyral".

In 100% by weight of the resin contained in the interlayer film, the content of the polyvinyl acetal resin is preferably 10% by weight or more, more preferably 30% by weight or more, still more preferably 50% by weight or more, further preferably 70% by weight or more, especially preferably 80% by weight or more, most preferably 90% by weight or more. In 100% by weight of the resin contained in the interlayer film, the content of the polyvinyl acetal resin is preferably 100% by weight or less. It is preferred that the main ingredient (50% by weight or more) of the resin of the interlayer film be a polyvinyl acetal resin. The range of the content of the polyvinyl acetal resin can be set by appropriately selecting the upper limit value and the lower limit value.

In 100% by weight of the resin contained in the first layer, the content of the polyvinyl acetal resin is preferably 10% by weight or more, more preferably 30% by weight or more, still more preferably 50% by weight or more, further preferably 70% by weight or more, especially preferably 80% by weight or more, most preferably 90% by weight or more. In 100% by weight of the resin contained in the first layer, the content of the polyvinyl acetal resin is preferably 100% by weight

or less. It is preferred that the main ingredient (50% by weight or more) of the resin of the first layer be a polyvinyl acetal resin. The range of the content of the polyvinyl acetal resin can be set by appropriately selecting the upper limit value and the lower limit value.

In 100% by weight of the resin contained in the second layer, the content of the polyvinyl acetal resin is preferably 10% by weight or more, more preferably 30% by weight or more, still more preferably 50% by weight or more, further preferably 70% by weight or more, especially preferably 80% by weight or more, most preferably 90% by weight or more. In 100% by weight of the resin contained in the second layer, the content of the polyvinyl acetal resin is preferably 100% by weight or less. It is preferred that the main ingredient (50% by weight or more) of the resin of the second layer be a polyvinyl acetal resin. The range of the content of the polyvinyl acetal resin can be set by appropriately selecting the upper limit value and the lower limit value.

In 100% by weight of the resin contained in the third layer, the content of the polyvinyl acetal resin is preferably 10% by weight or more, more preferably 30% by weight or more, still more preferably 50% by weight or more, further preferably 70% by weight or more, especially preferably 80% by weight or more, most preferably 90% by weight or more. In 100% by weight of the resin contained in the third layer, the content of the polyvinyl acetal resin is preferably 100% by weight or less. It is preferred that the main ingredient (50% by weight or more) of the resin of the third layer be a polyvinyl acetal resin. The range of the content of the polyvinyl acetal resin can be set by appropriately selecting the upper limit value and the lower limit value.

(Plasticizer)

From the viewpoint of further enhancing the adhesive strength of an interlayer film, it is preferred that the interlayer film contain a plasticizer (hereinafter, sometimes described as a plasticizer (0)). It is preferred that the first layer contain a plasticizer (hereinafter, sometimes described as a plasticizer (1)). It is preferred that the second layer contain a plasticizer (hereinafter, sometimes described as a plasticizer (2)). It is preferred that the third layer contain a plasticizer (hereinafter, sometimes described as a plasticizer (3)). When the thermoplastic resin contained in the interlayer film is a polyvinyl acetal resin, it is especially preferred that the interlayer film (the respective layers) contain a plasticizer. It is preferred that a layer containing a polyvinyl acetal resin contain a plasticizer.

The plasticizer is not particularly limited. As the plasticizer, a conventionally known plasticizer can be used. One kind of the plasticizer may be used alone, and two or more kinds thereof may be used in combination.

Examples of the plasticizer include organic ester plasticizers such as a monobasic organic acid ester and a polybasic organic acid ester, organic phosphate plasticizers and organic phosphite plasticizers, and the like. It is preferred that the plasticizer be an organic ester plasticizer. It is preferred that the plasticizer be a liquid plasticizer.

Examples of the monobasic organic acid ester include a glycol ester obtained by the reaction of a glycol with a monobasic organic acid, and the like. Examples of the glycol include triethylene glycol, tetraethylene glycol, tripropylene glycol, and the like. Examples of the monobasic organic acid include butyric acid, isobutyric acid, caproic acid, 2-ethylbutyric acid, heptanoic acid, n-octylic acid, 2-ethylhexanoic acid, n-nonylic acid, decylic acid, benzoic acid and the like.

Examples of the polybasic organic acid ester include an ester compound of a polybasic organic acid and an alcohol having a linear or branched structure of 4 to 8 carbon atoms, and the like. Examples of the polybasic organic acid include adipic acid, sebacic acid, azelaic acid, and the like.

Examples of the organic ester plasticizer include triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, diethylene glycol dibenzoate, dipropylene glycol dibenzoate, dihexyl adipate, dioctyl adipate, hexyl cyclohexyl adipate, a mixture of heptyl adipate and nonyl adipate, diisononyl adipate, diisodecyl adipate, heptyl nonyl adipate, dibutyl sebacate, oil-modified sebacic alkyds, a mixture of a phosphoric acid ester and an adipic acid ester, and the like. As the organic ester plasticizer, other organic ester plasticizer than those recited above may be used. As the adipic acid ester, adipic acid esters other than the aforementioned adipic acid esters may be used.

Examples of the organic phosphate plasticizer include tributoxyethyl phosphate, isodecyl phenyl phosphate, triisopropyl phosphate, and the like.

It is preferred that the plasticizer be a diester plasticizer represented by the following formula (1).

[Chemical 1]

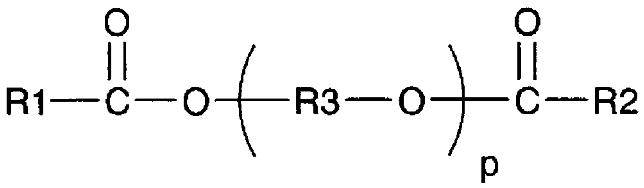

···(1)

In the formula (1), R1 and R2 each represent an organic group having 2 to 10 carbon atoms, R3 represents an ethylene group, an isopropylene group, or an n-propylene group, and p represents an integer of 3 to 10. R1 and R2 in the formula (1) each are preferably an organic group having 5 to 10 carbon atoms, and more preferably an organic group having 6 to 10 carbon atoms.

It is preferred that the plasticizer include triethylene glycol di-2-ethylhexanoate (3GO), triethylene glycol di-2-ethylbutyrate (3GH) or triethylene glycol di-2-ethylpropanoate. It is more preferred that the plasticizer include triethylene glycol di-2-ethylhexanoate (3GO) or triethylene glycol di-2-ethylbutyrate (3GH), and it is further preferred that the plasticizer include triethylene glycol di-2-ethylhexanoate (3GO).

The content of the plasticizer contained in the interlayer film per 100 parts by weight of the resin (0) contained in the interlayer film is preferably 5 parts by weight or more, more preferably 25 parts by weight or more, further preferably 30 parts by weight or more, and is preferably 45 parts by weight or less, more preferably 40 parts by weight or less, further preferably 38 parts by weight or less, especially preferably 36 parts by weight or less. When the content of the plasticizer is the above lower limit or more, the penetration resistance of laminated glass is further enhanced. When the content of the plasticizer is the above upper limit or less, it becomes easy to adjust the glass transition temperature of the interlayer film within the above range. Also, the transparency of the interlayer film is further enhanced. The range of the content of the plasticizer can be set by appropriately selecting the upper limit value and the lower limit value.

The content of the plasticizer (1) contained in the first layer per 100 parts by weight of the resin (1) contained in the first layer is defined as content (1). The content (1) is preferably 50 parts by weight or more, more preferably 55 parts by weight or more, further preferably 60 parts by weight or more, and is preferably 100 parts by weight or less, more preferably 90 parts by weight or less, further preferably 85 parts by weight or less, especially preferably 80 parts by weight or less. When the content (1) is the above lower limit or more, the flexibility of the interlayer film is enhanced and the handling of the interlayer film is facilitated. When the content (1) is the above upper limit or less, the penetration resistance of laminated glass is further enhanced. The range of the content (1) can be set by appropriately selecting the upper limit value and the lower limit value.

The content of the plasticizer (2) contained in the second layer per 100 parts by weight of the resin (2) contained in the second layer is defined as content (2). The content of the plasticizer (3) contained in the third layer per 100 parts by weight of the resin (3) contained in the third layer is defined as content (3). Each of the content (2) and the content (3) is preferably 5 parts by weight or more, more preferably 10 parts by weight or more, still more preferably 15 parts by weight or more, further preferably 20 parts by weight or more, especially preferably 24 parts by weight or more, most preferably 25 parts by weight or more, and is preferably 45 parts by weight or less, more preferably 40 parts by weight or less, further preferably 35 parts by weight or less, especially preferably 34 parts by weight or less, most preferably 33 parts by weight or less. When the content (2) and the content (3) are the above lower limit or more, the flexibility of the interlayer film is enhanced and the handling of the interlayer film is facilitated. When the content (2) and the content (3) are the above upper limit or less, the penetration resistance of the laminated glass is further enhanced. The range of the content (2)and the range of the content (3) can be set by appropriately selecting the upper limit value and the lower limit value.

For the purpose of enhancing the sound insulating property of the laminated glass, it is preferred that the content (1) be larger than the content (2) and it is preferred that the content (1) be larger than the content (3).

Each of an absolute value of difference between the content (2) and the content (1), and an absolute value of difference between the content (3) and the content (1) is preferably 10 parts by weight or more, more preferably 15 parts by weight or more, further preferably 20 parts by weight or more, especially preferably 25 parts by weight or more, and is preferably 80 parts by weight or less, more preferably 75 parts by weight or less, still more preferably 70 parts by weight or less, still more preferably 65 parts by weight or less, still more preferably 60 parts by weight or less, further preferably 55 parts by weight or less, still further preferably 50 parts by weight or less, especially preferably 45 parts by weight or less, most preferably 40 parts by weight or less. When the absolute value of difference is the above lower limit or more and the above upper limit or less, it is possible to further enhance the sound insulating property of the laminated glass. The range of the absolute value of difference can be set by appropriately selecting the upper limit value and the lower limit value.

(Heat shielding substance)

It is preferred that the interlayer film contain a heat shielding substance. It is preferred that the first layer contain a heat shielding substance. It is preferred that the second layer contain a heat shielding substance. It is preferred that the

third layer contain a heat shielding substance. One kind of the heat shielding substance may be used alone, and two or more kinds thereof may be used in combination.

It is preferred that the heat shielding substance contain at least one kind of Ingredient X among a phthalocyanine compound, a naphthalocyanine compound, and an anthracyanine compound or contain heat shielding particles. In this case, the heat shielding substance may contain both of the Ingredient X and the heat shielding particles.

Ingredient X:

It is preferred that the interlayer film contain at least one kind of Ingredient X among a phthalocyanine compound, a naphthalocyanine compound, and an anthracyanine compound. It is preferred that the first layer contain the Ingredient X. It is preferred that the second layer contain the Ingredient X. It is preferred that the third layer contain the Ingredient X. The Ingredient X is a heat shielding substance. One kind of the Ingredient X may be used alone, and two or more kinds thereof may be used in combination.

The Ingredient X is not particularly limited. As the Ingredient X, conventionally known phthalocyanine compound, naphthalocyanine compound and anthracyanine compound can be used.

Examples of the Ingredient X include phthalocyanine, a derivative of phthalocyanine, naphthalocyanine, a derivative of naphthalocyanine, anthracyanine, and a derivative of anthracyanine, and the like. It is preferred that each of the phthalocyanine compound and the derivative of phthalocyanine have a phthalocyanine skeleton. It is preferred that each of the naphthalocyanine compound and the derivative of naphthalocyanine have a naphthalocyanine skeleton. It is preferred that each of the anthracyanine compound and the derivative of anthracyanine have an anthracyanine skeleton.

With regard to the interlayer film and laminated glass, from the viewpoint of further enhancing the heat shielding properties thereof, it is preferred that the Ingredient X be at least one kind selected from the group consisting of phthalocyanine, a derivative of phthalocyanine, naphthalocyanine and a derivative of naphthalocyanine, and it is more preferred that the Ingredient X be at least one kind among phthalocyanine and a derivative of phthalocyanine.

From the viewpoints of effectively enhancing the heat shielding property and maintaining the visible light transmittance at a higher level over a long period of time, it is preferred that the Ingredient X contain vanadium atoms or copper atoms. It is preferred that the Ingredient X contain vanadium atoms and it is also preferred that the Ingredient X contain copper atoms. It is more preferred that the Ingredient X be at least one kind among phthalocyanine containing vanadium atom(s) or copper atom(s) and a derivative of phthalocyanine containing vanadium atom(s) or copper atom(s). From the viewpoint of still further enhancing the heat shielding property of the interlayer film and the laminated glass, it is preferred that the Ingredient X have a structural unit in which an oxygen atom is bonded to a vanadium atom.

In 100% by weight of the interlayer film or in 100% by weight of a layer containing the Ingredient X (a first layer, a second layer, or a third layer), the content of the Ingredient X is preferably 0.001% by weight or more, more preferably 0.005% by weight or more, further preferably 0.01% by weight or more, and especially preferably 0.02% by weight or more and is preferably 0.2% by weight or less, more preferably 0.1% by weight or less, further preferably 0.05% by weight or less, and especially preferably 0.04% by weight or less. When the content of the Ingredient X is the above lower limit or more and the above upper limit or less, the heat shielding properties are sufficiently enhanced and the visible light transmittance is sufficiently heightened. For example, it is possible to make the visible light transmittance 70% or more. The range of the content of the Ingredient X can be set by appropriately selecting the upper limit value and the lower limit value.

Heat shielding particles:

It is preferred that the interlayer film contain heat shielding particles. It is preferred that the first layer contain the heat shielding particles. It is preferred that the second layer contain the heat shielding particles. It is preferred that the third layer contain the heat shielding particles. The heat shielding particle is of a heat shielding substance. By the use of heat shielding particles, infrared rays (heat rays) can be effectively cut off. One kind of the heat shielding particles may be used alone, and two or more kinds thereof may be used in combination.

From the viewpoint of further enhancing the heat shielding properties of laminated glass, it is more preferred that the heat shielding particles be metal oxide particles. It is preferred that the heat shielding particles be particles of a metal oxide (metal oxide particles).

The energy amount of an infrared ray with a wavelength of 780 nm or longer which is longer than that of visible light is small as compared with an ultraviolet ray. However, the thermal action of infrared rays is large, and when infrared rays are absorbed into a substance, heat is released from the substance. Accordingly, infrared rays are generally called heat rays. By the use of the heat shielding particles, infrared rays (heat rays) can be effectively cut off. In this connection, the heat shielding particle means a particle capable of absorbing infrared rays.

Specific examples of the heat shielding particles include metal oxide particles such as aluminum-doped tin oxide particles, indium-doped tin oxide particles, antimony-doped tin oxide particles (ATO particles), gallium-doped zinc oxide particles (GZO particles), indium-doped zinc oxide particles (IZO particles), aluminum-doped zinc oxide particles (AZO

particles), niobium-doped titanium oxide particles, tungsten oxide particles (sodium-doped tungsten oxide particles, cesium-doped tungsten oxide particles, thallium-doped tungsten oxide particles, and rubidium-doped tungsten oxide particles, etc.), tin-doped indium oxide particles (ITO particles), tin-doped zinc oxide particles and silicon-doped zinc oxide particles, lanthanum hexaboride ($LaB_6$) particles, and the like. Heat shielding particles other than these may be used. Since the heat ray shielding function is high, preferred are metal oxide particles, more preferred are ATO particles, GZO particles, IZO particles, ITO particles or tungsten oxide particles, and especially preferred are ITO particles or tungsten oxide particles. In particular, since the heat ray shielding function is high and the particles are readily available, preferred are tin-doped indium oxide particles (ITO particles), and also preferred are tungsten oxide particles.

From the viewpoint of further enhancing the heat shielding properties of the interlayer film and the laminated glass, it is preferred that the tungsten oxide particles be metal-doped tungsten oxide particles. Examples of the "tungsten oxide particles" include metal-doped tungsten oxide particles. Specifically, examples of the metal-doped tungsten oxide particles include sodium-doped tungsten oxide particles, cesium-doped tungsten oxide particles, thallium-doped tungsten oxide particles, rubidium-doped tungsten oxide particles, and the like.

From the viewpoint of further enhancing the heat shielding property of the interlayer film and the laminated glass, cesium-doped tungsten oxide particles are especially preferred. From the viewpoint of still further enhancing the heat shielding property of the interlayer film and the laminated glass, it is preferred that the cesium-doped tungsten oxide particles be tungsten oxide particles represented by the formula: $Cs_{0.33}WO_3$.

The average particle diameter of the heat shielding particles is preferably 0.01 μm or more, more preferably 0.02 μm or more, and is preferably 0.1 μm or less, more preferably 0.05 μm or less. When the average particle diameter is the aforementioned lower limit or more, the heat ray shielding properties are sufficiently enhanced. When the average particle diameter is the above upper limit or less, the dispersibility of heat shielding particles is enhanced. The range of the average particle diameter can be set by appropriately selecting the upper limit value and the lower limit value.

The "average particle diameter" refers to the volume average particle diameter. The average particle diameter can be measured using a particle size distribution measuring apparatus ("UPA-EX150" available from NIKKISO CO., LTD.), or the like.

In 100% by weight of the interlayer film or in 100% by weight of a layer containing the heat shielding particles (a first layer, a second layer, or a third layer), the content of the heat shielding particles (in particular, the content of tungsten oxide particles) is preferably 0.01% by weight or more, more preferably 0.1% by weight or more, further preferably 1% by weight or more, and especially preferably 1.5% by weight or more and is preferably 6% by weight or less, more preferably 5.5% by weight or less, further preferably 4% by weight or less, especially preferably 3.5% by weight or less, and most preferably 3% by weight or less. When the content of the heat shielding particles is the above lower limit or more and the above upper limit or less, the heat shielding property is sufficiently enhanced and the visible light transmittance is sufficiently enhanced. The range of the content of the heat shielding particles can be set by appropriately selecting the upper limit value and the lower limit value.

(Metal salt)

It is preferred that the interlayer film contain at least one kind of metal salt (hereinafter, sometimes described as Metal salt M) of alkali metal salts and alkali earth metal salts. It is preferred that the first layer contain the Metal salt M. It is preferred that the second layer contain the Metal salt M. It is preferred that the third layer contain the Metal salt M. The alkali earth metal means six metals of Be, Mg, Ca, Sr, Ba, and Ra. Use of the Metal salt M facilitates controlling of the adhesivity between the interlayer film and a lamination glass member such as a glass plate or the adhesivity between layers in the interlayer film. One kind of the Metal salt M may be used alone, and two or more kinds thereof may be used in combination.

It is preferred that the Metal salt M contain at least one kind of metal selected from the group consisting of Li, Na, K, Rb, Cs, Mg, Ca, Sr and Ba. It is preferred that the metal salt M contained in the interlayer film contain at least one kind of metal among K and Mg.

As the metal salt M, an alkali metal salt of an organic acid having 2 to 16 carbon atoms, and an alkali earth metal salt of an organic acid having 2 to 16 carbon atoms can be used. The metal salt M may include a magnesium carboxylate having 2 to 16 carbon atoms, or a potassium carboxylate having 2 to 16 carbon atoms.

Examples of the magnesium carboxylate having 2 to 16 carbon atoms and the potassium carboxylate having 2 to 16 carbon atoms include magnesium acetate, potassium acetate, magnesium propionate, potassium propionate, magnesium 2-ethylbutyrate, potassium 2-ethylbutanoate, magnesium 2-ethylhexanoate, potassium 2-ethylhexanoate, and the like.

The total of the contents of Mg and K in the interlayer film or the layer containing the Metal salt M (the first layer, the second layer or the third layer) is preferably 5 ppm or more, more preferably 10 ppm or more, further preferably 20 ppm or more, preferably 300 ppm or less, more preferably 250 ppm or less, further preferably 200 ppm or less. When the total of the contents of Mg and K is the above lower limit or more and the above upper limit or less, the adhesivity between the interlayer film and a lamination glass member (e.g., glass plate) or the adhesivity between layers in the interlayer film can be further

well controlled. The range of the total of the contents of Mg and K can be set by appropriately selecting the upper limit value and the lower limit value.

(Ultraviolet ray screening agent)

It is preferred that the interlayer film contain an ultraviolet ray screening agent. It is preferred that the first layer contain an ultraviolet ray screening agent. It is preferred that the second layer contain an ultraviolet ray screening agent. It is preferred that the third layer contain an ultraviolet ray screening agent. By the use of an ultraviolet ray screening agent, even when the laminated glass is used for a long period of time, the visible light transmittance becomes further hard and to be lowered. One kind of the ultraviolet ray screening agent may be used alone, and two or more kinds thereof may be used in combination.
Examples of the ultraviolet ray screening agent include an ultraviolet ray absorber. It is preferred that the ultraviolet ray screening agent be an ultraviolet ray absorber.
Examples of the ultraviolet ray screening agent include an ultraviolet ray screening agent containing a metal atom, an ultraviolet ray screening agent containing a metal oxide, an ultraviolet ray screening agent having a benzotriazole structure (a benzotriazole compound), an ultraviolet ray screening agent having a benzophenone structure (a benzophenone compound), an ultraviolet ray screening agent having a triazine structure (a triazine compound), an ultraviolet ray screening agent having a malonic acid ester structure (a malonic acid ester compound), an ultraviolet ray screening agent having an oxanilide structure (an oxanilide compound), an ultraviolet ray screening agent having a benzoate structure (a benzoate compound), and the like.
Examples of the ultraviolet ray screening agent containing a metal atom include platinum particles, particles in which the surface of platinum particles is coated with silica, palladium particles, particles in which the surface of palladium particles is coated with silica, and the like. It is preferred that the ultraviolet ray screening agent not be heat shielding particles.
The ultraviolet ray screening agent is preferably an ultraviolet ray screening agent having a benzotriazole structure, an ultraviolet ray screening agent having a benzophenone structure, an ultraviolet ray screening agent having a triazine structure, or an ultraviolet ray screening agent having a benzoate structure. The ultraviolet ray screening agent is more preferably an ultraviolet ray screening agent having a benzotriazole structure or an ultraviolet ray screening agent having a benzophenone structure, and is further preferably an ultraviolet ray screening agent having a benzotriazole structure.
Examples of the ultraviolet ray screening agent containing a metal oxide include zinc oxide, titanium oxide, cerium oxide, and the like. Furthermore, with regard to the ultraviolet ray screening agent containing a metal oxide, the surface may be coated. Examples of the coating material for the surface of the ultraviolet ray screening agent containing a metal oxide include an insulating metal oxide, a hydrolyzable organosilicon compound, a silicone compound, and the like.
Examples of the insulating metal oxide include silica, alumina, zirconia, and the like. For example, the insulating metal oxide has a band-gap energy of 5.0 eV or more.
Examples of the ultraviolet ray screening agent having a benzotriazole structure include 2-(2'-hydroxy-5'-methylphenyl)benzotriazole ("Tinuvin P" available from BASF Japan Ltd.), 2-(2'-hydroxy-3',5'-di-t-butylphenyl)benzotriazole ("Tinuvin 320" available from BASF Japan Ltd.), 2-(2'-hydroxy-3'-t-butyl-5-methylphenyl)-5-chlorobenzotriazole ("Tinuvin 326" available from BASF Japan Ltd.), 2-(2'-hydroxy-3',5'-di-amylphenyl)benzotriazole ("Tinuvin 328" available from BASF Japan Ltd.), and the like. It is preferred that the ultraviolet ray screening agent be an ultraviolet ray screening agent having a benzotriazole structure containing a halogen atom, and it is more preferred that the ultraviolet ray screening agent be an ultraviolet ray screening agent having a benzotriazole structure containing a chlorine atom, because those are excellent in ultraviolet ray screening performance.
Examples of the ultraviolet ray screening agent having a benzophenone structure include octabenzone ("Chimassorb 81" available from BASF Japan Ltd.), and the like.
Examples of the ultraviolet ray screening agent having a triazine structure include "LA-F70" available from ADEKA CORPORATION, 2-(4,6-diphenyl-1,3,5-triazine-2-yl)-5-[(hexyl)oxy]-phenol ("Tinuvin 1577FF" available from BASF Japan Ltd.), and the like.
Examples of the ultraviolet ray screening agent having a malonic acid ester structure include dimethyl 2-(p-methoxybenzylidene)malonate, tetraethyl-2,2-(1,4-phenylenedimethylidene)bismalonate, 2-(p-methoxybenzylidene)-bis(1,2,2,6,6-pentamethyl-4-piperidinyl)malonate, and the like.
Examples of a commercial product of the ultraviolet ray screening agent having a malonic acid ester structure include Hostavin B-CAP, Hostavin PR-25 and Hostavin PR-31 (any of these is available from Clariant Japan K.K.).
Examples of the ultraviolet ray screening agent having an oxanilide structure include a kind of oxalic acid diamide having a substituted aryl group and the like on the nitrogen atom such as N-(2-ethylphenyl)-N'-(2-ethoxy-5-t-butylphenyl) oxalic acid diamide, N-(2-ethylphenyl)-N'-(2-ethoxy-phenyl)oxalic acid diamide and 2-ethyl-2'-ethoxy-oxalanilide ("Sanduvor VSU" available from Clariant Japan K.K.).

Examples of the ultraviolet ray screening agent having a benzoate structure include 2,4-di-tert-butylphenyl-3,5-di-tert-butyl-4-hydroxybenzoate ("Tinuvin 120" available from BASF Japan Ltd.), and the like.

In 100% by weight of the interlayer film or in 100% by weight of the layer containing the ultraviolet ray screening agent (the first layer, the second layer or the third layer), the content of the ultraviolet ray screening agent is preferably 0.1% by weight or more, more preferably 0.2% by weight or more, further preferably 0.3% by weight or more, especially preferably 0.5% by weight or more, and is preferably 2.5% by weight or less, more preferably 2% by weight or less, further preferably 1% by weight or less, especially preferably 0.8% by weight or less. When the content of the ultraviolet ray screening agent is the above-described lower limit or more, deterioration in visible light transmittance after a lapse of a period is further suppressed. When the content of the ultraviolet ray screening agent is the above-described upper limit or less, deterioration in visible light transmittance after a lapse of a period of the interlayer film and the laminated glass can be significantly suppressed. The range of the content of the ultraviolet ray screening agent can be set by appropriately selecting the upper limit value and the lower limit value.

(Oxidation inhibitor)

It is preferred that the interlayer film contain an oxidation inhibitor. It is preferred that the first layer contain an oxidation inhibitor. It is preferred that the second layer contain an oxidation inhibitor. It is preferred that the third layer contain an oxidation inhibitor. One kind of the oxidation inhibitor may be used alone, and two or more kinds thereof may be used in combination.

Examples of the oxidation inhibitor include a phenol-based oxidation inhibitor, a sulfur-based oxidation inhibitor, a phosphorus-based oxidation inhibitor, and the like. The phenol-based oxidation inhibitor is an oxidation inhibitor having a phenol skeleton. The sulfur-based oxidation inhibitor is an oxidation inhibitor containing a sulfur atom. The phosphorus-based oxidation inhibitor is an oxidation inhibitor containing a phosphorus atom.

It is preferred that the oxidation inhibitor be a phenol-based oxidation inhibitor or a phosphorus-based oxidation inhibitor.

Examples of the phenol-based oxidation inhibitor include 2,6-di-t-butyl-p-cresol (BHT), butyl hydroxyanisole (BHA), 2,6-di-t-butyl-4-ethylphenol, stearyl β-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl) butane, tetrakis[methylene-3-(3',5'-butyl-4-hydroxyphenyl)propionate] methane, 1,3,3-tris-(2-methyl-4-hydroxy-5-t-butylphenol)butane, 1,3,5-trimethyl-2,4,6-tris(3,5-di-t-butyl-4-hydroxybenzyl)benzene, bis(3,3'-t-butylphenol)butyric acid glycol ester, and bis(3-t-butyl-4-hydroxy-5-methylbenzenepropanoic acid) ethylene bis(oxyethylene), and the like. One kind or two or more kinds among these oxidation inhibitors are suitably used.

Examples of the phosphorus-based oxidation inhibitor include tridecyl phosphite, tris(tridecyl) phosphite, triphenyl phosphite, trinonylphenyl phosphite, bis(tridecyl)pentaerithritol diphosphite, bis(decyl)pentaerithritol diphosphite, tris(2,4-di-t-butylphenyl) phosphite, bis(2,4-di-t-butyl-6-methylphenyl)ethyl ester phosphorous acid, 2,2'-methylenebis (4, 6-di-t-butyl-1-phenyloxy) (2-ethylhexyloxy) phosphorus, and the like. One kind or two or more kinds among these oxidation inhibitors are suitably used.

Examples of a commercial product of the oxidation inhibitor include "IRGANOX 245" available from BASF Japan Ltd., "IRGAFOS 168" available from BASF Japan Ltd., "IRGAFOS 38" available from BASF Japan Ltd., "Sumilizer BHT" available from Sumitomo Chemical Co., Ltd., "H-BHT" available from Sakai Chemical Industry Co., Ltd., "IRGANOX 1010" available from BASF Japan Ltd., and the like.

With regard to the interlayer film and laminated glass, in order to maintain high visible light transmittance thereof over a long period of time, the content of the oxidation inhibitor is preferably 0.03% by weight or more, more preferably 0.1% by weight or more in 100% by weight of the interlayer film or in 100% by weight of the layer containing the oxidation inhibitor (a first layer, a second layer, or a third layer). Because of saturation of the effect of adding an oxidization inhibitor, it is preferred that the content of the oxidation inhibitor be 2% by weight or less in 100% by weight of the interlayer film or in 100% by weight of a layer containing the oxidation inhibitor (first layer, second layer or third layer). The range of the content of the oxidation inhibitor can be set by appropriately selecting the upper limit value and the lower limit value.

(Light stabilizer)

It is preferred that the interlayer film contain a light stabilizer. It is preferred that the first layer contain a light stabilizer. It is preferred that the second layer contain a light stabilizer. It is preferred that the third layer contain a light stabilizer. One kind of the light stabilizer may be used alone and two or more kinds thereof may be used in combination.

It is preferred that the light stabilizer be a hindered amine light stabilizer.

Examples of the hindered amine light stabilizer include hindered amine light stabilizers in which a carbon atom, an alkoxy group or a hydrogen atom is bonded to a nitrogen atom of a piperidine structure. From the viewpoint of further

suppressing the discoloration, a hindered amine light stabilizer in which a carbon atom or an alkoxy group is bonded to a nitrogen atom of a piperidine structure is preferred. The hindered amine light stabilizer is preferably a hindered amine light stabilizer in which a carbon atom is bonded to a nitrogen atom of a piperidine structure, and also preferably a hindered amine light stabilizer in which an alkoxy group is bonded to a nitrogen atom of a piperidine structure. The hindered amine light stabilizer in which a carbon atom is bonded to a nitrogen atom of the piperidine structure may be a hindered amine light stabilizer in which an alkyl group or an alkylene group is bonded to a nitrogen atom of the piperidine structure. The hindered amine light stabilizer in which a carbon atom is bonded to a nitrogen atom of the piperidine structure may be a hindered amine light stabilizer in which an alkyl group is bonded to a nitrogen atom of the piperidine structure, and may be a hindered amine light stabilizer in which an alkylene group is bonded to a nitrogen atom of the piperidine structure.

Examples of the hindered amine light stabilizer in which a carbon atom is bonded to a nitrogen atom of a piperidine structure include "Tinuvin 765" and "Tinuvin 622SF" available from BASF Japan Ltd., and "ADK STAB LA-52" available from ADEKA, and the like. As the hindered amine light stabilizer in which an alkoxy group is bonded to a nitrogen atom of the piperidine structure, "Tinuvin XT-850FF" and "Tinuvin XT-855FF" available from BASF, and "ADK STAB LA-81" available from ADEKA, or the like can be recited. Examples of the hindered amine light stabilizer in which a hydrogen atom is bonded to a nitrogen atom of a piperidine structure include "Tinuvin 770DF" available from BASF Japan Ltd., and "Hostavin N24" available from Clariant, and the like.

From the viewpoint of further suppressing the discoloration, the light stabilizer has a molecular weight of preferably 2000 or less, more preferably 1000 or less, further preferably 700 or less.

In 100% by weight of the interlayer film or in 100% by weight of a layer containing the light stabilizer (a first layer, a second layer, or a third layer), the content of the light stabilizer is preferably 0.0025% by weight or more, more preferably 0.025% by weight or more, and is preferably 0.5% by weight or less, more preferably 0.3% by weight or less. When the content of the light stabilizer is the above lower limit or more and the above upper limit or less, discoloration is efficiently suppressed. The range of the content of the light stabilizer can be set by appropriately selecting the upper limit value and the lower limit value.

(Other ingredients)

Each of the interlayer film, the first layer, the second layer, and the third layer may contain other ingredients than the above-described ingredients as necessary. Examples of other ingredients include a coloring agent (pigment and a dye, etc.), a coupling agent, a dispersing agent, a surfactant, a fire retardant, an antistatic agent, an adhesive strength adjusting agent other than metal salt, a moisture-proofing agent, a fluorescent brightener, and an infrared absorber, and the like. One kind of these other ingredients may be used alone, and two or more kinds thereof may be used in combination.

(Other details of interlayer film for laminated glass)

The distance between the first end and the second end of the interlayer film is preferably 0.5 m or more, more preferably 0.8 m or more, especially preferably 1.0 m or more, and is preferably 3.0 m or less, more preferably 2.0 m or less, especially preferably 1.5 m or less. The range of the distance can be set by appropriately selecting the upper limit value and the lower limit value.

The interlayer film may be wound to be formed into a roll body of the interlayer film. The roll body may include a winding core and an interlayer film wound on the outer periphery of the winding core.

A method for producing the interlayer film is not particularly limited. In the case of a single-layered interlayer film, examples of a method for producing the interlayer film include a method of extruding a resin composition with an extruder. As a method for forming the interlayer film in the case of a multi-layered interlayer film, for example, a method of separately forming individual layers by using respective resin compositions for forming the layers, and then layering the obtained layers can be recited. Further, as a method for producing the interlayer film, a method of layering individual layers by co-extruding respective resin compositions for forming the layers using an extruder can be recited. A production method of extrusion-molding is preferred because the method is suitable for continuous production.

For the reason of excellent production efficiency of the interlayer film, it is preferred that the second layer and the third layer contain the same polyvinyl acetal resin. For the reason of excellent production efficiency of the interlayer film, it is more preferred that the second layer and the third layer contain the same polyvinyl acetal resin and the same plasticizer. For the reason of excellent production efficiency of the interlayer film, it is further preferred that the second layer and the third layer be formed of the same resin composition.

It is preferred that the method for producing the interlayer film include an extrusion step of obtaining an interlayer film before cutting by extrusion molding, and a cutting step of cutting a predetermined position from one end in the TD direction in the interlayer film before cutting. In the cutting step, it is preferred to cut a predetermined position from one end in the TD direction in the interlayer film before cutting, and a predetermined position from the other end in the TD direction in the interlayer film before cutting. In this case, it is possible to desirably obtain an interlayer film in which the configuration A

or the configuration B is satisfied.

It is preferred that the interlayer film have protrusions and recesses on at least one surface of the surfaces of both sides. It is more preferred that the interlayer film have protrusions and recesses on surfaces of both sides. Examples of the method for forming the protrusions and recesses include, but are not particularly limited to, a lip emboss method (melt fracture method), an emboss roll method, a calender roll method, and a profile extrusion method, and the like.

(Laminated glass)

A laminated glass according to the present invention includes a first lamination glass member, a second lamination glass member and an interlayer film. In the laminated glass according to the present invention, the interlayer film is arranged between the first lamination glass member and the second lamination glass member.

It is preferred that the laminated glass include a first lamination glass member, a second lamination glass member and the interlayer film described above.

The laminated glass has a first end (one end), and a second end (other end) being at an opposite side of the first end. The first end and the second end are both ends facing each other in the laminated glass. It is preferred that the first end and the second end in the laminated glass correspond to both ends facing each other in the TD direction of the interlayer film.

In the laminated glass, it is preferred that configuration A' below or configuration B' below be satisfied. In this case, it is possible to enhance the vibration damping property in a high frequency region in end parts of the laminated glass.

Configuration A': change rate A3 represented by formula (A3) below is less than 10%, and change rate A4 represented by formula (A4) below is less than 10%.

$$\text{Change rate A3 (\%)} = (|P_A' - Q_A'|/Q_A') \times 100 \quad ...(A3)$$

$P_A'$: a secondary loss coefficient of the laminated glass in a part of the laminated glass from a position of 0 mm to a position of 25 mm from the first end toward the second end

$Q_A'$: a secondary loss coefficient of the laminated glass in a part of the laminated glass from a position of 100 mm to a position of 125 mm from the first end toward the second end

$$\text{Change rate A4 (\%)} = (|R_A' - S_A'|/S_A') \times 100 \quad ...(A4)$$

$R_A'$: a secondary loss coefficient of the laminated glass in a part of the laminated glass from a position of 0 mm to a position of 25 mm from the second end toward the first end

$S_A'$: a secondary loss coefficient of the laminated glass in a part of the laminated glass from a position of 100 mm to a position of 125 mm from the second end toward the first end

Configuration B': change rate B3 represented by formula (B3) below is less than 10%, and change rate B4 represented by formula (B4) below is less than 10%.

$$\text{Change rate B3 (\%)} = (|P_B' - Q_B'|/Q_B') \times 100 \quad ...(B3)$$

$P_B'$: a secondary resonance frequency of the laminated glass in a part of the laminated glass from a position of 0 mm to a position of 25 mm from the first end toward the second end

$Q_B'$: a secondary resonance frequency of the laminated glass in a part of the laminated glass from a position of 100 mm to a position of 125 mm from the first end toward the second end

$$\text{Change rate B4 (\%)} = (|R_B' - S_B'|/S_B') \times 100 \quad ...(B4)$$

$R_B'$: a secondary resonance frequency of the laminated glass in a part of the laminated glass from a position of 0 mm to a position of 25 mm from the second end toward the first end

$S_B'$: a secondary resonance frequency of the laminated glass in a part of the laminated glass from a position of 100 mm to a position of 125 mm from the second end toward the first end

In the laminated glass, the configuration A' may be satisfied, the configuration B' may be satisfied, and the configuration A' and the configuration B' may be satisfied. From the viewpoint of exerting the effect of the present invention more effectively, in the laminated glass, it is preferred that the configuration B' be satisfied, and it is more preferred that the

configuration A' and the configuration B' be satisfied.

In the laminated glass in which the configuration A' is satisfied, change rate A3 represented by the formula (A3) is less than 10%, and a change rate A4 represented by the formula (A4) is less than 10%.

The change rate A3 is preferably more than 0%, more preferably 1% or more, still more preferably 1.8% or more, further preferably 2% or more, especially preferably 3% or more, most preferably 4% or more, and is preferably 9.7% or less, more preferably 9% or less, still more preferably 8% or less, further preferably 7% or less, especially preferably 6% or less. When the change rate the change rate A3 is more than the above lower limit or the above lower limit or more, it is possible to effectively suppress the generation of off-cuts in production of the laminated glass. When the change rate A3 is the above upper limit or less, it is possible to exert the effect of the present invention more effectively. The range of the change rate A3 can be set by appropriately selecting the upper limit value and the lower limit value.

A secondary loss coefficient ($P_A$') of the laminated glass is preferably 0.20 or more, more preferably 0.25 or more, further preferably 0.30 or more, and especially preferably 0.35 or more. When the secondary loss coefficient ($P_A$') is the above lower limit or more, it is possible to further enhance the sound insulating property of laminated glass. The secondary loss coefficient ($P_A$') of the laminated glass may be 0.80 or less, may be 0.75 or less, may be 0.70 or less, may be 0.65 or less, may be 0.60 or less, may be 0.55 or less, may be 0.50 or less, and may be 0.45 or less. A range of the secondary loss coefficient ($P_A$') of the laminated glass can be set by appropriately selecting the above upper limit value and the above lower limit value.

A secondary loss coefficient ($Q_A$') of the laminated glass is preferably 0.20 or more, more preferably 0.25 or more, further preferably 0.30 or more, and especially preferably 0.35 or more. When the secondary loss coefficient ($Q_A$') is the above lower limit or more, it is possible to further enhance the sound insulating property of laminated glass. The secondary loss coefficient ($Q_A$') of the laminated glass may be 0.80 or less, may be 0.75 or less, may be 0.70 or less, may be 0.65 or less, may be 0.60 or less, may be 0.55 or less, may be 0.50 or less, and may be 0.45 or less. A range of the secondary loss coefficient ($Q_A$') of the laminated glass can be set by appropriately selecting the above upper limit value and the above lower limit value.

The change rate A4 is preferably more than 0%, more preferably 1% or more, still more preferably 1.8% or more, further preferably 2% or more, especially preferably 3% or more, most preferably 4% or more, and is preferably 9% or less, more preferably 8% or less, still more preferably 7% or less, further preferably 6.9% or less, especially preferably 6% or less. When the change rate the change rate A4 is more than the above lower limit or the above lower limit or more, it is possible to effectively suppress the generation of off-cuts in production of the laminated glass. When the change rate A4 is the above upper limit or less, it is possible to exert the effect of the present invention more effectively. The range of the change rate A4 can be set by appropriately selecting the upper limit value and the lower limit value.

A secondary loss coefficient ($R_A$') of the laminated glass is preferably 0.20 or more, more preferably 0.25 or more, further preferably 0.30 or more, and especially preferably 0.35 or more. When the secondary loss coefficient ($R_A$') is the above lower limit or more, it is possible to further enhance the sound insulating property of laminated glass. The secondary loss coefficient ($R_A$) of the laminated glass may be 0.80 or less, may be 0.75 or less, may be 0.70 or less, may be 0.65 or less, may be 0.60 or less, may be 0.55 or less, may be 0.50 or less, and may be 0.45 or less. A range of the secondary loss coefficient ($R_A$') of the laminated glass can be set by appropriately selecting the above upper limit value and the above lower limit value.

A secondary loss coefficient ($S_A$') of the laminated glass is preferably 0.20 or more, more preferably 0.25 or more, further preferably 0.30 or more, and especially preferably 0.35 or more. When the secondary loss coefficient ($S_A$') is the above lower limit or more, it is possible to further enhance the sound insulating property of laminated glass. The secondary loss coefficient ($S_A$') of the laminated glass may be 0.80 or less, may be 0.75 or less, may be 0.70 or less, may be 0.65 or less, may be 0.60 or less, may be 0.55 or less, may be 0.50 or less, and may be 0.45 or less. A range of the secondary loss coefficient ($S_A$') of the laminated glass can be set by appropriately selecting the above upper limit value and the above lower limit value.

In the laminated glass in which the configuration B' is satisfied, change rate B3 represented by the formula (B3) is less than 10%, and a change rate B4 represented by the formula (B4) is less than 10%.

The change rate B3 is preferably more than 0%, more preferably 1% or more, still more preferably 1.8% or more, further preferably 2% or more, especially preferably 3% or more, most preferably 4% or more, and is preferably 9% or less, more preferably 8% or less, still more preferably 7.9% or less, further preferably 7% or less, especially preferably 6% or less. When the change rate the change rate B3 is more than the above lower limit or the above lower limit or more, it is possible to effectively suppress the generation of off-cuts in production of the laminated glass. When the change rate B3 is the above upper limit or less, it is possible to exert the effect of the present invention more effectively. The range of the change rate B3 can be set by appropriately selecting the upper limit value and the lower limit value.

A secondary resonance frequency ($P_B$') of the laminated glass is preferably 500 Hz or more, more preferably 600 Hz or more, further preferably 700 Hz or more, especially preferably 720 Hz or more, most preferably 760 Hz or more, and is preferably 1000 Hz or less, more preferably 900 Hz or less, further preferably 840 Hz or less. When the secondary resonance frequency ($P_B$') is the above lower limit or more and the above upper limit or less, it is possible to further enhance

the sound insulating property of the laminated glass. A range of the secondary resonance frequency ($P_B$') of the laminated glass can be set by appropriately selecting the above upper limit value and the above lower limit value.

A secondary resonance frequency ($Q_B$') of the laminated glass is preferably 500 Hz or more, more preferably 600 Hz or more, further preferably 700 Hz or more, especially preferably 720 Hz or more, most preferably 760 Hz or more, and is preferably 1000 Hz or less, more preferably 900 Hz or less, further preferably 840 Hz or less. When the secondary resonance frequency ($Q_B$') is the above lower limit or more and the above upper limit or less, it is possible to further enhance the sound insulating property of the laminated glass. A range of the secondary resonance frequency ($Q_B$') of the laminated glass can be set by appropriately selecting the above upper limit value and the above lower limit value.

The change rate B4 is preferably more than 0%, more preferably 1% or more, still more preferably 1.8% or more, further preferably 2% or more, especially preferably 3% or more, most preferably 4% or more, and is preferably 9% or less, more preferably 8% or less, still more preferably 7.4% or less, further preferably 7% or less, especially preferably 6% or less. When the change rate the change rate B4 is more than the above lower limit or the above lower limit or more, it is possible to effectively suppress the generation of off-cuts in production of the laminated glass. When the change rate B4 is the above upper limit or less, it is possible to exert the effect of the present invention more effectively. The range of the change rate B4 can be set by appropriately selecting the upper limit value and the lower limit value.

A secondary resonance frequency ($R_B$') of the laminated glass is preferably 500 Hz or more, more preferably 600 Hz or more, further preferably 700 Hz or more, especially preferably 720 Hz or more, most preferably 760 Hz or more, and is preferably 1000 Hz or less, more preferably 900 Hz or less, further preferably 840 Hz or less. When the secondary resonance frequency ($R_B$') is the above lower limit or more and the above upper limit or less, it is possible to further enhance the sound insulating property of the laminated glass. A range of the secondary resonance frequency ($R_B$') of the laminated glass can be set by appropriately selecting the above upper limit value and the above lower limit value.

A secondary resonance frequency ($S_B$') of the laminated glass is preferably 500 Hz or more, more preferably 600 Hz or more, further preferably 700 Hz or more, especially preferably 720 Hz or more, most preferably 760 Hz or more, and is preferably 1000 Hz or less, more preferably 900 Hz or less, further preferably 840 Hz or less. When the secondary resonance frequency ($S_B$') is the above lower limit or more and the above upper limit or less, it is possible to further enhance the sound insulating property of the laminated glass. A range of the secondary resonance frequency ($S_B$') of the laminated glass can be set by appropriately selecting the above upper limit value and the above lower limit value.

The secondary loss coefficient and the secondary resonance frequency of the laminated glass can be measured in the same manner as the above-described measuring method of the secondary loss coefficient and the secondary resonance frequency of the laminated glasses P, Q, R, S. In the above laminated glass, when the thickness of the first lamination glass member is different from the thickness of the second lamination glass, vibration is given from the surface of the lamination glass member having a larger thickness, and secondary loss coefficient and secondary resonance frequency are measured.

Fig. 3 is a sectional view schematically showing an example of laminated glass prepared with the interlayer film for laminated glass shown in Fig. 1.

A laminated glass 31 shown in Fig. 3 includes a first lamination glass member 21, a second lamination glass member 22 and the interlayer film 11. The interlayer film 11 is arranged between the first lamination glass member 21 and the second lamination glass member 22 and to be sandwiched therebetween.

The first lamination glass member 21 is layered on a first surface of the interlayer film 11. The second lamination glass member 22 is layered on a second surface opposite to the first surface of the interlayer film 11. The first lamination glass member 21 is layered on an outer surface of the second layer 2. The second lamination glass member 22 is layered on an outer surface of the third layer 3.

The laminated glass 31 has a first end 31a and a second end 31b. The first end 31a of the laminated glass 31 corresponds to the first end of the interlayer film 11, and the second end 31b of the laminated glass 31 corresponds to the second end of the interlayer film 11.

An end surface of the first end 31a has an end surface of the first lamination glass member 21, an end surface of the first layer 1, an end surface of the second layer 2, an end surface of the third layer 3, and an end surface of the second lamination glass member 22. An end surface of the first end 31a consists of an end surface of the first lamination glass member 21, an end surface of the first layer 1, an end surface of the second layer 2, an end surface of the third layer 3, and an end surface of the second lamination glass member 22. An end surface of the second end 31b has an end surface of the first lamination glass member 21, an end surface of the first layer 1, an end surface of the second layer 2, an end surface of the third layer 3, and an end surface of the second lamination glass member 22. An end surface of the second end 31b consists of an end surface of the first lamination glass member 21, an end surface of the first layer 1, an end surface of the second layer 2, an end surface of the third layer 3, and an end surface of the second lamination glass member 22.

In the laminated glass 31, secondary loss coefficient and secondary resonance frequency of the laminated glass 31 in a part P of the laminated glass 31 from a position of 0 mm to a position of 25 mm from the first end 31a toward the second end 31b can be measured. In the laminated glass 31, secondary loss coefficient and secondary resonance frequency of the laminated glass 31 in a part Q of the laminated glass 31 from a position of 100 mm to a position of 125 mm

from the first end 31a toward the second end 31b can be measured. In the laminated glass 31, secondary loss coefficient and secondary resonance frequency of the laminated glass 31 in a part R of the laminated glass 31 from a position of 0 mm to a position of 25 mm from the second end 31b toward the first end 31a can be measured. In the laminated glass 31, secondary loss coefficient and secondary resonance frequency of the laminated glass 31 in a part S of the laminated glass 31 from a position of 100 mm to a position of 125 mm from the second end 31b toward the first end 31a can be measured.

Fig. 4 is a sectional view schematically showing an example of laminated glass prepared with the interlayer film for laminated glass shown in Fig. 2.

A laminated glass 31A shown in Fig. 4 includes a first lamination glass member 21A, a second lamination glass member 22A and the interlayer film 11A. The interlayer film 11A is arranged between the first lamination glass member 21A and the second lamination glass member 22A to be sandwiched therebetween.

The first lamination glass member 21A is layered on a first surface of the interlayer film 11A. The second lamination glass member 22A is layered on a second surface opposite to the first surface of the interlayer film 11A. The first lamination glass member 21A is layered on an outer surface of the second layer 2A. The second lamination glass member 22A is layered on an outer surface of the third layer 3A.

The laminated glass 31A has a first end 31a and a second end 31b. The first end 31a of the laminated glass 31A corresponds to the first end of the interlayer film 11A, and the second end 31b of the laminated glass 31A corresponds to the second end of the interlayer film 11A.

An end surface of the first end 31a has an end surface of the first lamination glass member 21A, an end surface of the first layer 1A, an end surface of the second layer 2A, an end surface of the third layer 3A, and an end surface of the second lamination glass member 22A. An end surface of the first end 31a consists of an end surface of the first lamination glass member 21A, an end surface of the first layer 1A, an end surface of the second layer 2A, an end surface of the third layer 3A, and an end surface of the second lamination glass member 22A. An end surface of the second end 31b has an end surface of the first lamination glass member 21A, an end surface of the first layer 1A, an end surface of the second layer 2A, an end surface of the third layer 3A, and an end surface of the second lamination glass member 22A. An end surface of the second end 31b consists of an end surface of the first lamination glass member 21A, an end surface of the first layer 1A, an end surface of the second layer 2A, an end surface of the third layer 3A, and an end surface of the second lamination glass member 22A.

In the laminated glass 31A, secondary loss coefficient and secondary resonance frequency of the laminated glass 31A in a part P of the laminated glass 31A from a position of 0 mm to a position of 25 mm from the first end 31a toward the second end 31b can be measured. In the laminated glass 31A, secondary loss coefficient and secondary resonance frequency of the laminated glass 31A in a part Q of the laminated glass 31A from a position of 100 mm to a position of 125 mm from the first end 31a toward the second end 31b can be measured. In the laminated glass 31A, secondary loss coefficient and secondary resonance frequency of the laminated glass 31A in a part R of the laminated glass 31A from a position of 0 mm to a position of 25 mm from the second end 31b toward the first end 31a can be measured. In the laminated glass 31A, secondary loss coefficient and secondary resonance frequency of the laminated glass 31A in a part S of the laminated glass 31A from a position of 100 mm to a position of 125 mm from the second end 31b toward the first end 31a can be measured.

The laminated glass may be a head-up display. When the laminated glass is a head-up display, the laminated glass has a display region of the head-up display. The display region is a region on which information can be favorably displayed.

A head-up display system can be obtained by using the aforementioned head-up display. The head-up display system includes the laminated glass, and a light source device for irradiating the laminated glass with light for image display. The light source device can be attached, for example, to a dashboard in a vehicle. By irradiating the display region of the laminated glass with light from the light source device, it is possible to achieve image display.

It is preferred that the first lamination glass member be the first glass plate. It is preferred that the second lamination glass member be the second glass plate.

Examples of the first and second lamination glass members include a glass plate, a PET (polyethylene terephthalate) film, and the like. As the laminated glass, laminated glass in which an interlayer film is sandwiched between a glass plate and a PET film or the like, as well as laminated glass in which an interlayer film is sandwiched between two glass plates, is included. The laminated glass is a laminate including a glass plate, and it is preferred that at least one glass plate be used. It is preferred that each of the first lamination glass member and the second lamination glass member be a glass plate or a PET film, and the laminated glass include a glass plate as at least one of the first lamination glass member and the second lamination glass member. It is especially preferred that both of the first and second lamination glass members be glass plates.

Examples of the glass plate include a sheet of inorganic glass and a sheet of organic glass. Examples of the inorganic glass include float plate glass, heat ray-absorbing plate glass, heat ray-reflecting plate glass, polished plate glass, figured glass, wired plate glass, green glass, and the like. The organic glass is synthetic resin glass substituted for inorganic glass. Examples of the organic glass include a polycarbonate plate, a poly (meth) acrylic resin plate, and the like.

Examples of the poly(meth)acrylic resin plate include a polymethyl (meth)acrylate plate, and the like.

The thickness of each of the first lamination glass member and the second lamination glass member is preferably 1 mm or more, and is preferably 5 mm or less, more preferably 3 mm or less. Moreover, when the lamination glass member is a glass plate, the thickness of the glass plate is preferably 0.5 mm or more, more preferably 0.7 mm or more, and is preferably 5 mm or less, more preferably 3 mm or less. From the viewpoint of capability of lowering the numerical value of frequency response function (FRF) at 1000 Hz or more and 3000 Hz or less of the entire laminated glass, and further enhancing the vibration damping property in a high frequency region (for example, 1000 Hz or more and 3000 Hz or less), the smaller the thickness of each of the first lamination glass member and the second lamination glass member, the more preferred. For example, the thickness of each of the first lamination glass member and the second lamination glass member is preferably 2 mm or less, more preferably 1.8 mm or less, and further preferably 1.6 mm or less. When the lamination glass member is a PET film, the thickness of the PET film is preferably 0.03 mm or more and is preferably 0.5 mm or less.

Thickness of the first lamination glass member and thickness of the second lamination glass member may be the same or different from each other.

The FRF value of the laminated glass is not particularly limited, and for example, may be 10 dB or less, may be 6 dB or less, may be 5 dB or less, may be 4 dB or less, may be 3 dB or less, may be 2 dB or less, may be 1 dB or less, may be 0 dB or less, and may be -7 dB or less. The lower the FRF value, the more the vibration damping property is enhanced, however, the lower limit value is not particularly limited. From the viewpoint of enhancing the anti-foaming property while enhancing the vibration damping property, the FRF value of the laminated glass, for example, may be -20 dB or more, and may be -10 dB or more. The FRF value of the laminated glass can be measured by the method described in the later-described section of Examples. In the above laminated glass, when the thickness of the first lamination glass member is different from the thickness of the second lamination glass, vibration is given from the surface of the lamination glass member having a larger thickness, and FRF value is measured. A range of the FRF value of the laminated glass can be set by appropriately selecting the above upper limit value and the above lower limit value.

The method for producing the laminated glass is not particularly limited. The laminated glass can be produced, for example, in the following manner. First, the interlayer film is sandwiched between the first lamination glass member and the second lamination glass member to obtain a laminate. Then, for example, by passing the obtained laminate through pressure rolls or subjecting the obtained laminate to decompression suction in a rubber bag, the air remaining between the first and the second lamination glass members and the interlayer film is removed. Then, the laminate is preliminarily bonded together at about 70°C to 110°C to obtain a preliminarily press-bonded laminate. Next, by putting the preliminarily press-bonded laminate into an autoclave or by pressing the laminate, the laminate is press-bonded at about 120°C to 150°C and under a pressure of 1 MPa to 1.5 MPa. In this way, laminated glass can be obtained.

Each of the interlayer film and the laminated glass can be used for automobiles, railway vehicles, aircraft, ships, and buildings and the like. Each of the interlayer film and the laminated glass can also be used for applications other than these applications. It is preferred that the interlayer film and the laminated glass be an interlayer film and laminated glass for vehicles or for buildings respectively, and it is more preferred that the interlayer film and the laminated glass be an interlayer film and laminated glass for vehicles respectively. Each of the interlayer film and the laminated glass can be used for a windshield, side glass, rear glass, roof glass or glass for backlight of an automobile, and the like. The interlayer film and the laminated glass are suitably used for automobiles. The interlayer film is suitably used for obtaining laminated glass for an automobile.

Hereinafter, the present invention will be described in more detail with reference to examples and comparative examples. The present invention is not limited only to these examples.

In polyvinyl acetal resins used, n-butyraldehyde which has 4 carbon atoms is used for the acetalization. With regard to the polyvinyl acetal resin, the acetalization degree (the butyralization degree), the acetylation degree and the content of the hydroxyl group were measured by a method conforming to JIS K6728 "Testing methods for polyvinyl butyral". In this connection, even in the cases of being measured according to ASTM D1396-92, numerical values similar to those obtained by a method in accordance with JIS K6728 "Testing methods for polyvinyl butyral" were exhibited.

The following materials were prepared.

(Resin)

PVB1: Polyvinyl acetal resin (polyvinyl butyral resin), average polymerization degree of 1700, content of hydroxyl group of 30% by mole, acetylation degree of 0.7% by mole, acetalization degree (butyralization degree) of 69.3% by mole

PVB2: Polyvinyl acetal resin (polyvinyl butyral resin), average polymerization degree of 3000, content of hydroxyl group of 24% by mole, acetylation degree of 12% by mole, acetalization degree (butyralization degree) of 64% by mole

PVB3: Polyvinyl acetal resin (polyvinyl butyral resin), average polymerization degree of 3300, content of hydroxyl group of 23.5% by mole, acetylation degree of 18.5% by mole, acetalization degree (butyralization degree) of 58% by mole

(Plasticizer)

3GO: Triethylene glycol di-2-ethylhexanoate

(Metal salt)

Mg mixture (50 : 50 (weight ratio) mixture of magnesium 2-ethylbutyrate and magnesium acetate)

(Ultraviolet ray screening agent)

Tinuvin326: 2-(2'-hydroxy-3'-t-butyl-5-methylphenyl)-5-chlorobenzotriazole ("Tinuvin 326" available from BASF Japan Ltd.)

(Oxidation inhibitor)

BHT: 2,6-di-t-butyl-p-cresol

(Example 1)

Preparation of resin composition for forming first layer:
The following ingredients were mixed, and kneaded sufficiently with a mixing roll to obtain a composition for forming a first layer.

PVB3: 100 parts by weight
3GO: 60 parts by weight
Mg mixture: An amount that gives a magnesium amount of 70 ppm in the obtained first layer
Tinuvin326: An amount of 0.2% by weight in the obtained first layer
BHT: An amount of 0.2% by weight in the obtained first layer

Preparation of resin composition for forming second layer and third layer:
The following ingredients were mixed, and kneaded sufficiently with a mixing roll to obtain a resin composition for forming a second layer and a third layer.

PVB1: 100 parts by weight
3GO: 32.5 parts by weight
Mg mixture: An amount that gives a magnesium amount of 70 ppm in the obtained second, third layers
Tinuvin326: An amount of 0.2% by weight in the obtained second, third layers
BHT: An amount of 0.2% by weight in the obtained second, third layers

Preparation of interlayer film:

The resin composition for forming a first layer, and the resin composition for forming second and third layers were coextruded by using a co-extruder to obtain an interlayer film before cutting. In the co-extrusion molding, the setting conditions intended to make each of the first, second, and third layers have a uniform thickness were employed. Next, in the interlayer film before cutting, a position of 25 mm inside from the one end in the TD direction, and a position of 25 mm inside from the other end in the TD direction were respectively cut using a score cutter. In this manner, a rectangular interlayer film (thickness 760 $\mu$m) having the first end and the second end and a three-layer structure (second layer/first layer/third layer) was obtained. The first end and the second end are both ends facing each other in the TD direction of the interlayer film, and the distance between the first end and the second end is 1092 mm.
The "cutting position (1)" in Tables indicates the distance from one end to the cutting position in the TD direction in the interlayer film before cutting. The "cutting position (2)" in Tables indicates the distance from the other end to the cutting position in the TD direction in the interlayer film before cutting.

Preparation of laminated glass:

The obtained interlayer film was sandwiched between two sheets of green glass conforming to JIS R3208 having a thickness of 2.0 mm, a width of 50 cm, and a length of 40 cm to obtain a laminate. The obtained laminate was put into a rubber bag and the inside thereof was degassed for 20 minutes with a degree of vacuum of 0.08 MPa, after which the laminate in the degassed condition was transferred into an oven, and vacuum-pressed by retention at 90°C for 30 minutes, and thus the laminate was preliminarily press-bonded. The preliminarily press-bonded laminate was subjected to press-bonding for 20 minutes under conditions of 140°C and a pressure of 1.3 MPa in an autoclave to obtain a laminated glass.

(Examples 2 to 6 and Comparative Examples 1, 2)

A rectangular interlayer film having the first end and the second end, and a three-layer structure (second layer/first layer/third layer) (thickness: 760 μm) was obtained in the same manner as that in Example 1 except that the kind of resin and the blending amount of the plasticizer, and the position where the interlayer film before cutting is cut were changed as shown in Table. In Table, the cutting positions (1), (2) are 0 mm mean that cutting was not conducted. Regarding the metal salt, the ultraviolet ray screening agent, and the oxidation inhibitor, the same kinds and the same blending amounts as those in Example 1 were used. Also, a laminated glass was obtained in the same manner as that in Example 1.

(Example 7)

Preparation of resin composition for forming first layer:
The following ingredients were mixed, and kneaded sufficiently with a mixing roll to obtain a composition for forming a first layer.

PVB3: 100 parts by weight
3GO: 60 parts by weight
Mg mixture: An amount that gives a magnesium amount of 70 ppm in the obtained first layer
Tinuvin326: An amount of 0.2% by weight in the obtained first layer
BHT: An amount of 0.2% by weight in the obtained first layer

Preparation of resin composition for forming second layer and third layer:
The following ingredients were mixed, and kneaded sufficiently with a mixing roll to obtain a resin composition for forming a second layer and a third layer.

PVB1: 100 parts by weight
3GO: 32.5 parts by weight
Mg mixture: An amount that gives a magnesium amount of 70 ppm in the obtained second, third layers
Tinuvin326: An amount of 0.2% by weight in the obtained second, third layers
BHT: An amount of 0.2% by weight in the obtained second, third layers

Preparation of interlayer film:

The resin composition for forming a first layer, and the resin composition for forming second and third layers were coextruded by using a co-extruder to obtain an interlayer film before cutting. In the co-extrusion molding, the setting conditions intended to make the thickness of each of the second and third layers increase from one end toward the other end in the TD direction so that the thickness of the first layer is uniform was employed. Next, in the interlayer film before cutting, a position of 25 mm inside from the one end in the TD direction, and a position of 25 mm inside from the other end in the TD direction were respectively cut using a score cutter. In this manner, a wedge-shaped interlayer film having the first end and the second end and a three-layer structure (second layer/first layer/third layer) was obtained. The first end and the second end are both ends facing each other in the TD direction of the interlayer film, and the distance between the first end and the second end is 1092 mm.

Preparation of laminated glass:

A laminated glass was obtained with the obtained interlayer film in the same manner as in Example 1.

(Examples 8, 9 and Comparative Example 3)

A wedge-shaped interlayer film having the first end and the second end, and a three-layer structure (second layer/first layer/third layer) was obtained in the same manner as that in Example 7 except that the kind of resin and the blending amount of the plasticizer, and the position where the interlayer film before cutting is cut were changed as shown in Table. In Table, the cutting positions (1), (2) are 0 mm mean that cutting was not conducted. Regarding the metal salt, the ultraviolet ray screening agent, and the oxidation inhibitor, the same kinds and the same blending amounts as those in Example 7 were used. Also, a laminated glass was obtained in the same manner as that in Example 7.

(Examples 10, 11)

Preparation of laminated glass:
A laminated glass was obtained in the same manner as that in Example 1 except that the interlayer film obtained in Example 3 was used, and two sheets of green glass having a thickness described in the following Table were used.

(Evaluation)

(1) Measurement of viscoelasticity (glass transition temperature and tanδ at glass transition temperature)

The obtained interlayer film was sandwiched between two sheets of 100 μm-thick polyethylene terephthalate films (PET film, "Lumirror H10" available from TORAY INDUSTRIES, INC.) to obtain a laminate. The obtained laminate was sandwiched between two sheets of 2.0 mm-thick green glass and put into a rubber bag, which was then degassed for 20 minutes with a degree of vacuum of 0.08 MPa. After degassing, the laminate in the degassed condition was transferred into an oven, and vacuum-pressed by retention at 90°C for 30 minutes, and thus the laminate was preliminarily press-bonded. After the preliminary press-bonding, the laminate was subjected to press-bonding for 20 minutes under conditions of 140°C and a pressure of 1.3 MPa in an autoclave to obtain a test piece. The obtained test piece was stored for four weeks in an environment at a room temperature of 23 ± 2°C and a humidity of 25 ± 5%. After storage, the green glass and the PET film were delaminated, and viscoelasticity was measured using a viscoelasticity measuring device "ARES-G2" available from TA Instruments. A parallel plate with a diameter of 8 mm was used as a jig, and the measurement was performed in a shearing mode under the condition in which the temperature was decreased from 100°C to -20°C at a temperature decreasing rate of 3°C/minute and under the condition of a frequency of 1 Hz and a strain of 1%. In the obtained measurement results, the peak temperature of loss tangent is defined as glass transition temperature Tg (°C), and the value of loss tangent at the glass transition temperature is defined as tanδ at the glass transition temperature.

(2) Thickness

The following thicknesses were measured for the obtained interlayer film.

(a) Thickness in the first end
(b) Thickness in the second end
(c) Thickness of the layer having the lowest glass transition temperature (first layer) at a position of 12.5 mm from the first end toward the second end
(d) Thickness of the interlayer film at a position of 12.5 mm from the first end toward the second end
(e) Thickness of the layer having the lowest glass transition temperature (first layer) at a position of 112.5 mm from the first end toward the second end
(f) Thickness of the interlayer film at a position of 112.5 mm from the first end toward the second end
(g) Thickness of the layer having the lowest glass transition temperature (first layer) at a position of 12.5 mm from the second end toward the first end
(h) Thickness of the interlayer film at a position of 12.5 mm from the second end toward the first end
(i) Thickness of the layer having the lowest glass transition temperature (first layer) at a position of 112.5 mm from the second end toward the first end
(j) Thickness of the interlayer film at a position of 112.5 mm from the second end toward the first end

Also, from the thicknesses of the above (c) to (j), the following ratios of thickness were calculated.

Ratio ($T_P$): Ratio of thickness (c) to thickness (d) (thickness (c)/thickness (d))
Ratio (Tp): Ratio of thickness (e) to thickness (f) (thickness (e)/thickness (f))
Ratio ($T_R$): Ratio of thickness (g) to thickness (h) (thickness (g)/thickness (h))

Ratio ($T_S$): Ratio of thickness (i) to thickness (j) (thickness (i)/thickness (j))

From the calculated ratio ($T_P$), ratio ($T_Q$), ratio ($T_R$) and ratio ($T_S$), change rate C1 and change rate C2 were calculated according to the above-described formula (C1) and formula (C2).

(3) Secondary loss coefficient and secondary resonance frequency of laminated glass

Predetermined positions of the obtained interlayer film were cut out to obtain an interlayer film for preparation of laminated glass P, an interlayer film for preparation of laminated glass Q, an interlayer film for preparation of laminated glass R, and an interlayer film for preparation of laminated glass S. The cut out interlayer film was sandwiched between two sheets (25 mm × 300 mm) of green glass conforming to JIS R3208 having a thickness of 2.0 mm to obtain a laminate. The obtained laminate was put into a rubber bag and the inside thereof was degassed for 20 minutes with a degree of vacuum of 0.08 MPa, after which the laminate in the degassed condition was transferred into an oven, and vacuum-pressed by retention at 90°C for 30 minutes, and thus the laminate was preliminarily press-bonded. The preliminarily press-bonded laminate was subjected to press-bonding for 20 minutes under conditions of 140°C and a pressure of 1.3 MPa in an autoclave to obtain the following laminated glasses P, Q, R, S.

Laminated glass P:

A laminated glass obtained by arranging between two sheets of 2.0 mm-thick green glass, a part of the interlayer film from a position of 0 mm to a position of 25 mm from the first end toward the second end.

Laminated glass Q:

A laminated glass obtained by arranging between two sheets of 2.0 mm-thick green glass, a part of the interlayer film from a position of 100 mm to a position of 125 mm from the first end toward the second end.

Laminated glass R:

A laminated glass obtained by arranging between two sheets of 2.0 mm-thick green glass, a part of the interlayer film from a position of 0 mm to a position of 25 mm from the second end toward the first end.

Laminated glass S:

A laminated glass obtained by arranging between two sheets of 2.0 mm-thick green glass, a part of the interlayer film from a position of 100 mm to a position of 125 mm from the second end toward the first end.

Secondary loss coefficients and secondary resonance frequencies of the obtained laminated glasses P, Q, R, S were measured in the following manner.

The laminated glasses P, Q, R, S were stored in an environment at a temperature of 23 ± 2°C and a humidity of 25 ± 5% for four weeks. The laminated glasses P, Q, R, S after storage were vibrated with a vibration generator for damping test ("Pertable Vibration Exciter Type 4809" available from Spectris Co., Ltd.) in a constant temperature bath at 20°C. The obtained vibration characteristics were amplified with a mechanical impedance measuring device ("75 VA Power Amplifier Type 2718" available from Spectris Co., Ltd.), and vibration spectra were FFT analyzed to determine a secondary resonance frequency and a secondary loss coefficient. As analysis software, "PULSE LabShop" available from Spectris Co., Ltd. was used.

From the measurement results, the change rate A1, the change rate A2, the change rate B1 and the change rate B2 were calculated according to the aforementioned formula (A1), formula (A2), formula (B1) and formula (B2).

(4) Vibration damping property in high frequency region in end parts of laminated glass (FRF)

Using the interlayer films obtained in Examples 1 to 11, and Comparative Examples 1 to 3, vibration damping property in a high frequency region in end parts of the laminated glass was measured in the following methods.

(4-1) Preparation of laminated glass for evaluation:

By cutting the obtained interlayer film in the following manner, interlayer films for evaluation 1 to 4 were obtained. By cutting out the obtained interlayer film while shifting slightly in the MD direction, interlayer films for evaluation 1 to 4 were obtained.

Interlayer film for evaluation 1:

An interlayer film for evaluation having a size of a width (TD direction) of 50 cm × a length (MD direction) of 40 cm, which is an interlayer film part from a position of 0 mm to a position of 500 mm from the first end toward the second end of the interlayer film.

Interlayer film for evaluation 2:

An interlayer film for evaluation having a size of a width (TD direction) of 50 cm × a length (MD direction) of 40 cm, which is an interlayer film part from a position of 100 mm to a position of 600 mm from the first end toward the second end of the interlayer film.

Interlayer film for evaluation 3:

An interlayer film for evaluation having a size of a width (TD direction) of 50 cm × a length (MD direction) of 40 cm, which is an interlayer film part from a position of 0 mm to a position of 500 mm from the second end toward the first end of the interlayer film.

Interlayer film for evaluation 4:

An interlayer film for evaluation having a size of a width (TD direction) of 50 cm × a length (MD direction) of 40 cm, which is an interlayer film part from a position of 100 mm to a position of 600 mm from the second end toward the first end of the interlayer film.

Each of the obtained interlayer films for evaluation 1 to 4 was sandwiched between two sheets of green glass conforming to JIS R3208 having a thickness of 2.0 mm, a width of 50 cm, and a length of 40 cm to obtain a laminate. The obtained laminate was put into a rubber bag and the inside thereof was degassed for 20 minutes with a degree of vacuum of 0.08 MPa, after which the laminate in the degassed condition was transferred into an oven, and vacuum-pressed by retention at 90°C for 30 minutes, and thus the laminate was preliminarily press-bonded. The preliminarily press-bonded laminate was subjected to press-bonding for 20 minutes under conditions of 140°C and a pressure of 1.3 MPa in an autoclave to obtain laminated glasses for evaluation 1 to 4 respectively corresponding to the interlayer films for evaluation 1 to 4. In Examples 10, 11, laminated glasses for evaluation 1 to 4 were prepared in the above-described conditions using two sheets of green glass conforming to JIS R3208 having a thickness described in the following Table 10 having a width of 50 cm and a length of 40 cm.

(4-2) Measurement of frequency response function (FRF)

The widthwise direction and the lengthwise direction of the obtained laminated glass for evaluation are defined as x direction and y direction, respectively, and the coordinates (x, y) of four corners of the laminated glass for evaluation are represented by coordinates (0, 0), coordinates (0, 40), coordinates (50, 0), and coordinates (50, 40), respectively. The coordinates (x, y) indicate the position of x cm in the widthwise direction and y cm in the lengthwise direction from the coordinates (0, 0). Coordinates between the coordinates (0, 0) and the coordinates (0, 40) are an end of the laminated glass for evaluation. The position of coordinates (5, 5) was set as an acceleration pickup position, and an accelerometer for measuring acceleration was installed at the position of coordinates (5, 5). Also, the position of coordinates (35, 5) was set as H1, and the position of coordinates (5, 35) was set as H10. An arc centered at the position of the coordinates (5, 5) (acceleration pickup position) was set from H1 to H10, and H2 to H9 were set on the arc at regular intervals. At H1 as a vibration point, vibration was given five times with an impact hummer. FRFs (response ($m/s^2$) to vibration (F)) obtained by respective vibrations were arithmetically averaged to calculate mean FRF (H1) at H1. In the same manner, mean FRF (H2) at H2, mean FRF (H3) at H3,... mean FRF (H10) at H10 were calculated. Mean FRF(H1) to mean FRF(H10) were arithmetically averaged to determine mean FRF (H1-H10). After averaging mean FRFs (H1-H10) over 1000 Hz to 3000 Hz, the average was converted into dB value, and the value was defined as "FRF value of laminated glass for evaluation". The above "end of laminated glass for evaluation" means an end on the first end side in the interlayer film in the laminated glasses for evaluation 1, 2, and means an end on the second end side in the interlayer film in the laminated glasses for evaluation 3, 4.

The laminated glass on which the accelerometers were installed was brought into a Free-Free condition by suspending it with soft rubber, and the measurement was conducted. As analysis software, "BKConnect" available from Spectris Co., Ltd. was used. Also, as the accelerometer, "352C68" available from PCB Piezotronics, Inc. was used. Also, as the impact hammer, "086C01" (aluminum head) available from PCB Piezotronics, Inc. was used.

An absolute value of difference between FRF value of the laminated glass for evaluation 1 and FRF value of the

laminated glass for evaluation 2, and an absolute value of difference between the FRF value of the laminated glass for evaluation 3 and the FRF value of the laminated glass for evaluation 4 were calculated, and vibration damping property (FRF) in a high frequency region in end parts of the laminated glass was evaluated in the following criteria.

[Criteria for judgement in vibration damping property (FRF) in high frequency region in end parts of laminated glass]

◦: The absolute value of the difference is less than 0.7.
×: The absolute value of the difference is 0.7 or more.

(5) Measurement of frequency response function (FRF) in center part of laminated glass

Using the interlayer films obtained in Examples 3, 10, 11, frequency response function (FRF) in the center part of the laminated glass corresponding to the center part of the interlayer film was measured in the following manner.

(5-1) Preparation of laminated glass for evaluation:

An interlayer film for evaluation having a size of a width (TD direction) of 50 cm × a length (MD direction) of 40 cm, which is an interlayer film part from the following first position to the following second position of the interlayer film.
First position: a position at 25 cm from the center position in the TD direction of the interlayer film toward the first end
Second position: a position at 25 cm from the center position in the TD direction of the interlayer film toward the second end
The obtained interlayer film for evaluation was sandwiched between two sheets of green glass conforming to JIS R3208 having a thickness described in the following Table 10, a width of 50 cm, and a length of 40 cm to obtain a laminate. The obtained laminate was put into a rubber bag and the inside thereof was degassed for 20 minutes with a degree of vacuum of 0.08 MPa, after which the laminate in the degassed condition was transferred into an oven, and vacuum-pressed by retention at 90°C for 30 minutes, and thus the laminate was preliminarily press-bonded. The preliminarily press-bonded laminate was subjected to press-bonding for 20 minutes under conditions of 140°C and a pressure of 1.3 MPa in an autoclave to obtain a laminated glass for evaluation corresponding to the interlayer film for evaluation.

(5-2) Measurement of frequency response function (FRF)

A FRF value of the laminated glass for evaluation was determined in the same manner as that described in the above "(4-2) Measurement of frequency response function (FRF)".
Configurations of interlayer films and results are shown in the following Tables 1 to 10.

[Table 1]

| | | | | Example 1 | Example 2 | Example 3 |
|---|---|---|---|---|---|---|
| First layer (Intermediate layer) | Resin | Kind | - | PVB3 | PVB3 | PVB3 |
| | | Content | parts by weight | 100 | 100 | 100 |
| | Plasticizer | Kind | - | 3GO | 3GO | 3GO |
| | | Content | parts by weight | 60 | 60 | 60 |
| Second, third layers (Surface layer) | Resin | Kind | - | PVB1 | PVB1 | PVB1 |
| | | Content | parts by weight | 100 | 100 | 100 |
| | Plasticizer | Kind | - | 3GO | 3GO | 3GO |
| | | Content | parts by weight | 32.5 | 32.5 | 32.5 |
| Cutting position (1) | | | mm | 25 | 50 | 100 |

(continued)

| | | | | Example 1 | Example 2 | Example 3 |
|---|---|---|---|---|---|---|
| Cutting position (2) | | | mm | 25 | 50 | 100 |
| Interlayer film | Content of plasticizer per 100 parts by weight of resin | | parts by weight | 35.4 | 35.4 | 35.4 |
| | Wedge angle (θ) | | mrad | 0 | 0 | 0 |
| | Thickness | First end | μm | 759 | 766 | 769 |
| | | Second end | μm | 759 | 766 | 769 |
| | Ratio of thickness | Ratio ($T_P$) | - | 0.11 | 0.12 | 0.14 |
| | | Ratio ($T_Q$) | - | 0.14 | 0.14 | 0.14 |
| | | Ratio ($T_R$) | - | 0.11 | 0.12 | 0.14 |
| | | Ratio ($T_S$) | - | 0.14 | 0.14 | 0.14 |
| | Change rate C1 | | % | 21.4 | 14.3 | 0.0 |
| | Change rate C2 | | % | 21.4 | 14.3 | 0.0 |

[Table 2]

| | | | | Example 1 | Example 2 | Example 3 |
|---|---|---|---|---|---|---|
| Glass transition temperature | | First layer | °C | 3.1 | 3.1 | 3.1 |
| | | Second, third layers | °C | 37.6 | 37.6 | 37.6 |
| Tanδ at glass transition temperature | | First layer | - | 1.42 | 1.42 | 1.42 |
| | | Second, third layers | - | 0.54 | 0.54 | 0.54 |
| Secondary loss coefficient | Change rate A1 | | % | 6.9 | 2.0 | 0 |
| | Change rate A2 | | % | 6.9 | 2.0 | 0 |
| Secondary resonance frequency | Change rate B1 | | % | 5.6 | 1.8 | 0 |
| | Change rate B2 | | % | 5.6 | 1.8 | 0 |
| Vibration damping property in high frequency region in end parts of laminated glass (FRF) | FRF | Laminated glass for evaluation 1 | dB | 0.7 | 0.9 | 0.8 |
| | | Laminated glass for evaluation 2 | dB | 0.8 | 0.8 | 0.8 |
| | | Laminated glass for evaluation 3 | dB | 0.7 | 0.9 | 0.8 |
| | | Laminated glass for evaluation 4 | dB | 0.8 | 0.8 | 0.8 |
| | Absolute value of difference between FRF value of laminated glass for evaluation 1 and FRF value of laminated glass for evaluation 2 | | dB | 0.1 | 0.1 | 0.0 |
| | | | Determination | ○ | ○ | ○ |
| | Absolute value of difference between FRF value of laminated glass for evaluation 3 and FRF value of laminated glass for evaluation 4 | | dB | 0.1 | 0.1 | 0.0 |
| | | | Determination | ○ | ○ | ○ |

[Table 3]

| | | | | Example 4 | Example 5 | Example 6 |
|---|---|---|---|---|---|---|
| First layer (Intermediat layer) | Resin | Kind | - | PVB2 | PVB2 | PVB2 |
| | | Content | parts by weight | 100 | 100 | 100 |
| | Plasticizer | Kind | - | 3GO | 3GO | 3GO |
| | | Content | parts by weight | 60 | 60 | 60 |
| Second, third layers (Surface layer) | Resin | Kind | - | PVB1 | PVB1 | PVB1 |
| | | Content | parts by weight | 100 | 100 | 100 |
| | Plasticizer | Kind | - | 3GO | 3GO | 3GO |
| | | Content | parts by weight | 38.9 | 38.9 | 38.9 |
| Cutting position (1) | | | mm | 25 | 50 | 100 |
| Cutting position (2) | | | mm | 25 | 50 | 100 |
| Interlayer film | Content of plasticizer per 100 parts by weight of resin | | parts by weight | 40.5 | 40.5 | 40.5 |
| | Wedge angle (8) | | mrad | 0 | 0 | 0 |
| | Thickness | First end | μm | 781 | 766 | 765 |
| | | Second end | μm | 781 | 766 | 765 |
| | Ratio of thickness | Ratio ($T_P$) | - | 0.09 | 0.12 | 0.14 |
| | | Ratio ($T_Q$) | - | 0.14 | 0.14 | 0.14 |
| | | Ratio ($T_R$) | - | 0.09 | 0.12 | 0.14 |
| | | Ratio ($T_S$) | - | 0.14 | 0.14 | 0.14 |
| | Change rate C1 | | % | 35.7 | 14.3 | 0.0 |
| | Change rate C2 | | % | 35.7 | 14.3 | 0.0 |

[Table 4]

| | | | Example 4 | Example 5 | Example 6 |
|---|---|---|---|---|---|
| Glass transition temperature | First layer | °C | 0.1 | 0.1 | 0.1 |
| | Second, third layers | °C | 34.3 | 34.3 | 34.3 |
| Tanδ at glass transition temperature | First layer | - | 1.26 | 1.26 | 1.26 |
| | Second, third layers | - | 0.50 | 0.50 | 0.50 |
| Secondary loss coefficient | Change rate A1 | % | 4.7 | 1.8 | 0 |
| | Change rate A2 | % | 4.7 | 1.8 | 0 |
| Secondary resonance frequency | Change rate B1 | % | 6.5 | 3.4 | 0 |
| | Change rate B2 | % | 6.5 | 3.4 | 0 |

(continued)

| | | | | Example 4 | Example 5 | Example 6 |
|---|---|---|---|---|---|---|
| Vibration damping property in high frequency region in end parts of laminated glass (FRF) | FRF | Laminated glass for evaluation 1 | dB | 4.1 | 4.5 | 4.3 |
| | | Laminated glass for evaluation 2 | dB | 4.3 | 4.3 | 4.3 |
| | | Laminated glass for evaluation 3 | dB | 4.1 | 4.5 | 4.3 |
| | | Laminated glass for evaluation 4 | dB | 4.3 | 4.3 | 4.3 |
| | Absolute value of difference between FRF value of laminated glass for evaluation 1 and FRF value of laminated glass for evaluation 2 | | dB | 0.2 | 0.2 | 0.0 |
| | | | Determination | ○ | ○ | ○ |
| | Absolute value of difference between FRF value of laminated glass for evaluation 3 and FRF value of laminated glass for evaluation 4 | | dB | 0.2 | 0.2 | 0.0 |
| | | | Determination | ○ | ○ | ○ |

[Table 5]

| | | | | Example 7 | Example 8 | Example 9 |
|---|---|---|---|---|---|---|
| First layer (Intermediate layer) | Resin | Kind | - | PVB3 | PVB3 | PVB3 |
| | | Content | parts by weight | 100 | 100 | 100 |
| | Plasticizer | Kind | - | 3GO | 3GO | 3GO |
| | | Content | parts by weight | 60 | 60 | 60 |
| Second, third layers (Surface layer) | Resin | Kind | - | PVB1 | PVB1 | PVB1 |
| | | Content | parts by weight | 100 | 100 | 100 |
| | Plasticizer | Kind | - | 3GO | 3GO | 3GO |
| | | Content | parts by weight | 32.5 | 32.5 | 32.5 |
| Cutting position (1) | | | mm | 25 | 50 | 100 |
| Cutting position (2) | | | mm | 25 | 50 | 100 |

(continued)

| | | | | Example 7 | Example 8 | Example 9 |
|---|---|---|---|---|---|---|
| Interlayer film | Content of plasticizer per 100 parts by weight of resin | | parts by weight | 35.4 | 35.4 | 35.4 |
| | Wedge angle (θ) | | mrad | 0.69 | 0.69 | 0.69 |
| | Thickness | First end | μm | 759 | 767 | 785 |
| | | Second end | μm | 1485 | 1490 | 1467 |
| | Ratio of thickness | Ratio ($T_P$) | - | 0.09 | 0.11 | 0.13 |
| | | Ratio ($T_Q$) | - | 0.13 | 0.13 | 0.13 |
| | | Ratio ($T_R$) | - | 0.09 | 0.12 | 0.13 |
| | | Ratio ($T_S$) | - | 0.13 | 0.13 | 0.13 |
| | Change rate C1 | | % | 30.8 | 15.4 | 0.0 |
| | Change rate C2 | | % | 30.8 | 7.7 | 0.0 |

[Table 6]

| | | | | Example 7 | Example 8 | Example 9 |
|---|---|---|---|---|---|---|
| Glass transition temperature | | First layer | °C | 2.2 | 2.2 | 2.2 |
| | | Second, third layers | °C | 37.2 | 37.2 | 37.2 |
| Tanδ at glass transition temperature | | First layer | - | 1.40 | 1.40 | 1.40 |
| | | Second, third layers | - | 0.54 | 0.54 | 0.54 |
| Secondary loss coefficient | Change rate A1 | | % | 9.7 | 3.5 | 0 |
| | Change rate A2 | | % | 4.2 | 1.2 | 0 |
| Secondary resonance frequency | Change rate B1 | | % | 7.9 | 3.9 | 0 |
| | Change rate B2 | | % | 7.4 | 4.9 | 0 |
| Vibration damping property in high frequency region in end parts of laminated glass (FRF) | FRF | Laminated glass for evaluation 1 | dB | 0.2 | 0.1 | 0.1 |
| | | Laminated glass for evaluation 2 | dB | 0.1 | 0.1 | 0.1 |
| | | Laminated glass for evaluation 3 | dB | -0.1 | -0.2 | -0.3 |
| | | Laminated glass for evaluation 4 | dB | -0.3 | -0.3 | -0.3 |
| | Absolute value of difference between FRF value of laminated glass for evaluation 1 and FRF value of laminated glass for evaluation 2 | | dB | 0.1 | 0.0 | 0.0 |
| | | | Determination | ○ | ○ | ○ |
| | Absolute value of difference between FRF value of laminated glass for evaluation 3 and FRF value of laminated glass for evaluation 4 | | dB | 0.2 | 0.1 | 0.0 |
| | | | Determination | ○ | ○ | ○ |

[Table 7]

| | | | | Comparative Example 1 | Comparative Example 2 | Comparative Example 3 |
|---|---|---|---|---|---|---|
| First layer (Intermediate layer) | Resin | Kind | - | PVB3 | PVB2 | PVB3 |
| | | Content | parts by weight | 100 | 100 | 100 |
| | Plasticizer | Kind | - | 3GO | 3GO | 3GO |
| | | Content | parts by weight | 60 | 60 | 60 |
| Second, third layers (Surface layer) | Resin | Kind | - | PVB1 | PVB1 | PVB1 |
| | | Content | parts by weight | 100 | 100 | 100 |
| | Plasticizer | Kind | - | 3GO | 3GO | 3GO |
| | | Content | parts by weight | 32.5 | 38.9 | 32.5 |
| Cutting position (1) | | | mm | 0 | 0 | 0 |
| Cutting position (2) | | | mm | 0 | 0 | 0 |
| Interlayer film | Content of plasticizer per 100 parts by weight of resin | | parts by weight | 35.4 | 40.5 | 35.4 |
| | Wedge angle (θ) | | mrad | 0 | 0 | 0.69 |
| | Thickness | First end | μm | 703 | 781 | 727 |
| | | Second end | μm | 703 | 781 | 1382 |
| | Ratio of thickness | Ratio ($T_P$) | - | 0.06 | 0.05 | 0.07 |
| | | Ratio ($T_Q$) | - | 0.14 | 0.14 | 0.13 |
| | | Ratio ($T_R$) | - | 0.06 | 0.05 | 0.06 |
| | | Ratio ($T_S$) | - | 0.14 | 0.14 | 0.13 |
| | Change rate C1 | | % | 57.1 | 64.3 | 46.2 |
| | Change rate C2 | | % | 57.1 | 64.3 | 53.8 |

[Table 8]

| | | | Comparative Example 1 | Comparative Example 2 | Comparative Example 3 |
|---|---|---|---|---|---|
| Glass transition temperature | First layer | °C | 3.1 | 0.1 | 2.2 |
| | Second, third layers | °C | 37.6 | 34.3 | 37.2 |
| Tanδ at glass transition temperature | First layer | - | 1.42 | 1.26 | 1.40 |
| | Second, third layers | - | 0.54 | 0.50 | 0.54 |
| Secondary loss coefficient | Change rate A1 | % | 19. 6 | 10.0 | 7.2 |
| | Change rate A2 | % | 19.6 | 10.0 | 17.2 |
| Secondary resonance frequency | Change rate B1 | % | 12.9 | 13.9 | 9.7 |
| | Change rate B2 | % | 12.9 | 13.9 | 16.0 |

(continued)

| | | | | Comparative Example 1 | Comparative Example 2 | Comparative Example 3 |
|---|---|---|---|---|---|---|
| Vibration damping property in high frequency region in end parts of laminated glass (FRF) | FRF | Laminated glass for evaluation 1 | dB | 1.7 | 5.3 | 0.6 |
| | | Laminated glass for evaluation 2 | dB | 0.8 | -0.3 | 0.1 |
| | | Laminated glass for evaluation 3 | dB | 1.7 | 5.3 | 0.5 |
| | | Laminated glass for evaluation 4 | dB | 0.8 | -0.3 | -0.3 |
| | Absolute value of difference between FRF value of laminated glass for evaluation 1 and FRF value of laminated glass for evaluation 2 | | dB | 0.9 | 5.6 | 0.5 |
| | | | Determination | × | × | ○ |
| | Absolute value of difference between FRF value of laminated glass for evaluation 3 and FRF value of laminated glass for evaluation 4 | | dB | 0.9 | 5.6 | 0.8 |
| | | | Determination | × | × | × |

[Table 9]

| | | | | Example 3 | Example 10 | Example 11 |
|---|---|---|---|---|---|---|
| First layer (Intermediate layer) | Resin | Kind | - | PVB3 | PVB3 | PVB3 |
| | | Content | parts by weight | 100 | 100 | 100 |
| | Plasticizer | Kind | - | 3GO | 3GO | 3GO |
| | | Content | parts by weight | 60 | 60 | 60 |
| Second, third layers (Surface layer) | Resin | Kind | - | PVB1 | PVB1 | PVB1 |
| | | Content | parts by weight | 100 | 100 | 100 |
| | Plasticizer | Kind | - | 3GO | 3GO | 3GO |
| | | Content | parts by weight | 32.5 | 32.5 | 32.5 |
| Cutting position (1) | | | mm | 100 | 100 | 100 |
| Cutting position (2) | | | mm | 100 | 100 | 100 |

(continued)

| | | | | Example 3 | Example 10 | Example 11 |
|---|---|---|---|---|---|---|
| Interlayer film | Content of plasticizer per 100 parts by weight of resin | | parts by weight | 35.4 | 35.4 | 35.4 |
| | Wedge angle (θ) | | mrad | 0 | 0 | 0 |
| | Thickness | First end | μm | 769 | 769 | 769 |
| | | Second end | μm | 769 | 769 | 769 |
| | Ratio of thickness | Ratio ($T_P$) | - | 0.14 | 0.14 | 0.14 |
| | | Ratio ($T_Q$) | - | 0.14 | 0.14 | 0.14 |
| | | Ratio ($T_R$) | - | 0.14 | 0.14 | 0.14 |
| | | Ratio ($T_S$) | - | 0.14 | 0.14 | 0.14 |
| | Change rate C1 | | % | 0.0 | 0.0 | 0.0 |
| | Change rate C2 | | % | 0.0 | 0.0 | 0.0 |

[Table 10]

| | | | Example 3 | Example 10 | Example 11 |
|---|---|---|---|---|---|
| Glass transition temperature | First layer | °C | 3.1 | 3.1 | 3.1 |
| | Second, third layers | °C | 37.6 | 37.6 | 37.6 |
| Tanδ at glass transition temperature | First layer | - | 1.42 | 1.42 | 1.42 |
| | Second, third layers | - | 0.54 | 0.54 | 0.54 |
| Secondary loss coefficient | Change rate A1 | % | 0 | 0 | 0 |
| | Change rate A2 | % | 0 | 0 | 0 |
| Secondary resonance frequency | Change rate B1 | % | 0 | 0 | 0 |
| | Change rate B2 | % | 0 | 0 | 0 |
| Thickness of first lamination glass member | | mm | 2 | 1.8 | 1.6 |
| Thickness of second lamination glass member | | mm | 2 | 1.8 | 1.6 |
| Vibration damping property in high frequency region in end parts of laminated glass (FRF) | Absolute value of difference between FRF value of laminated glass for evaluation 1 and FRF value of laminated glass for evaluation 2 | dB | 0.0 | 0.0 | 0.0 |
| | | Determination | ○ | ○ | ○ |
| | Absolute value of difference between FRF value of laminated glass for evaluation 3 and FRF value of laminated glass for evaluation 4 | dB | 0.0 | 0.0 | 0.0 |
| | | Determination | ○ | ○ | ○ |
| Vibration damping property in high frequency region in center part of laminated glass (FRF) | | dB | 0.8 | -0.5 | -1.8 |

## EXPLANATION OF SYMBOLS

1, 1A: First layer

1a, 1Aa: First surface

1b, 1Ab: Second surface

2, 2A: Second layer

3, 3A: Third layer

11, 11A: Interlayer film

11a: First end

11b: Second end

21, 21A: First lamination glass member

22, 22A: Second lamination glass member

31, 31A: Laminated glass

31a: First end

31b: Second end

P: Portion from position of 0 mm to position of 25 mm from first end toward second end

Q: Portion from position of 100 mm to position of 125 mm from first end toward second end

R: Portion from position of 0 mm to position of 25 mm from second end toward first end

S: Portion from position of 100 mm to position of 125 mm from second end toward first end

## Claims

**1.** An interlayer film for laminated glass,

the interlayer film having a first end, and a second end being at an opposite side of the first end,
when a laminated glass P obtained by arranging a part of the interlayer film from a position of 0 mm to a position of 25 mm from the first end toward the second end between two sheets of 2.0 mm-thick green glass,
a laminated glass Q obtained by arranging a part of the interlayer film from a position of 100 mm to a position of 125 mm from the first end toward the second end between two sheets of 2.0 mm-thick green glass,
a laminated glass R obtained by arranging a part of the interlayer film from a position of 0 mm to a position of 25 mm from the second end toward the first end between two sheets of 2.0 mm-thick green glass, and
a laminated glass S obtained by arranging a part of the interlayer film from a position of 100 mm to a position of 125 mm from the second end toward the first end between two sheets of 2.0 mm-thick green glass are obtained,
configuration A or configuration B below being satisfied:

configuration A: change rate A1 represented by formula (A1) below is less than 10%, and change rate A2 represented by formula (A2) below is less than 10%,

$$\text{change rate A1 (\%)} = (|P_A - Q_A|/Q_A) \times 100 \quad ...(A1)$$

$P_A$: secondary loss coefficient of the laminated glass P,
$Q_A$: secondary loss coefficient of the laminated glass Q,

$$\text{change rate A2 (\%)} = (|R_A - S_A|/S_A) \times 100 \quad ...(A2)$$

$R_A$: secondary loss coefficient of the laminated glass R,
$S_A$: secondary loss coefficient of the laminated glass S,
configuration B: change rate B1 represented by formula (B1) below is less than 10%, and change rate B2

represented by formula (B2) below is less than 10%,

$$\text{change rate B1 (\%)} = (|P_B - Q_B|/Q_B) \times 100 \quad ...(B1)$$

$P_B$: secondary resonance frequency of the laminated glass P,
$Q_B$: secondary resonance frequency of the laminated glass Q,

$$\text{change rate B2(\%)} = (|R_B - S_B|/S_B) \times 100 \quad ...(B2)$$

$R_B$: secondary resonance frequency of the laminated glass R,
$S_B$: secondary resonance frequency of the laminated glass S.

**2.** The interlayer film for laminated glass according to claim 1, wherein the configuration A is satisfied.

**3.** The interlayer film for laminated glass according to claim 1, wherein the configuration B is satisfied.

**4.** The interlayer film for laminated glass according to claim 1, wherein the configuration A and the configuration B are satisfied.

**5.** The interlayer film for laminated glass according to any one of claims 1 to 4, including:

a first layer containing a resin; and
a second layer containing a resin,
the second layer being arranged on a first surface side of the first layer.

**6.** The interlayer film for laminated glass according to claim 5, wherein

the resin in the first layer is a thermoplastic resin, and
the resin in the second layer is a thermoplastic resin.

**7.** The interlayer film for laminated glass according to claim 5 or 6, including:

a third layer containing a resin,
the third layer being arranged on a second surface side opposite to the first surface side of the first layer.

**8.** The interlayer film for laminated glass according to claim 7, wherein the resin in the third layer is a thermoplastic resin.

**9.** The interlayer film for laminated glass according to any one of claims 5 to 8, wherein glass transition temperature of the first layer is different from glass transition temperature of the second layer.

**10.** The interlayer film for laminated glass according to any one of claims 5 to 9, wherein glass transition temperature of a layer having the highest glass transition temperature is 32°C or more.

**11.** The interlayer film for laminated glass according to claim 10, wherein glass transition temperature of a layer having the highest glass transition temperature is 37°C or more.

**12.** The interlayer film for laminated glass according to any one of claims 5 to 11, wherein

the second layer is a surface layer of the interlayer film, and
the second layer is a layer having the highest glass transition temperature.

**13.** The interlayer film for laminated glass according to any one of claims 5 to 12, wherein tanδ at glass transition temperature of a layer having the lowest glass transition temperature is 1.2 or more.

**14.** The interlayer film for laminated glass according to claim 13, wherein tanδ at glass transition temperature of the layer having the lowest glass transition temperature is 1.4 or more.

**15.** The interlayer film for laminated glass according to any one of claims 5 to 14, wherein the first layer is the layer having the lowest transition temperature.

**16.** An interlayer film for laminated glass according to any one of claims 5 to 15, wherein

an end surface of the first end has an end surface of the layer having the lowest glass transition temperature, and an end surface of the second end has an end surface of the layer having the lowest glass transition temperature.

**17.** The interlayer film for laminated glass according to any one of claims 5 to 16, wherein configuration C below is satisfied:

configuration C: change rate C1 represented by formula (C1) below is more than 0% and 50% or less, and change rate C2 represented by formula (C2) below is more than 0% and 50% or less,

$$\text{change rate C1 }(\%) = (|T_P - T_Q|/T_Q) \times 100 \ ...(C1)$$

$T_P$: a ratio of thickness of the layer having the lowest glass transition temperature at a position of 12.5 mm from the first end toward the second end to thickness of the interlayer film at a position of 12.5 mm from the first end toward the second end,
$T_Q$: a ratio of thickness of the layer having the lowest glass transition temperature at a position of 112.5 mm from the first end toward the second end to thickness of the interlayer film at a position of 112.5 mm from the first end toward the second end,

$$\text{change rate C2 }(\%) = (|T_R - T_S|/T_S) \times 100 \ ...(C2)$$

$T_R$: a ratio of thickness of the layer having the lowest glass transition temperature at a position of 12.5 mm from the second end toward the first end to thickness of the interlayer film at a position of 12.5 mm from the second end toward the first end,
$T_S$: a ratio of thickness of the layer having the lowest glass transition temperature at a position of 112.5 mm from the second end toward the first end to thickness of the interlayer film at a position of 112.5 mm from the second end toward the first end.

**18.** The interlayer film for laminated glass according to any one of claims 1 to 17, containing:

a resin and a plasticizer,
wherein a content of the plasticizer contained in the interlayer film per 100 parts by weight of the resin contained in the interlayer film is 36 parts by weight or less.

**19.** The interlayer film for laminated glass according to any one of claims 1 to 18, wherein a sectional shape in a thickness direction of the interlayer film is a wedge-like shape.

**20.** A laminated glass comprising:

a first lamination glass member;
a second lamination glass member; and
the interlayer film for laminated glass according to any one of claims 1 to 19,
the interlayer film for laminated glass being arranged between the first lamination glass member and the second lamination glass member.

**21.** A laminated glass, having a first end, and a second end being at an opposite side of the first end, wherein configuration A' below or configuration B' is satisfied:

Configuration A': change rate A3 represented by formula (A3) below is less than 10%, and change rate A4 represented by formula (A4) below is less than 10%,

$$\text{change rate A3 }(\%) = (|P_A' - Q_A'|/Q_A') \times 100 \ ...(A3)$$

$P_A$': a secondary loss coefficient of the laminated glass in a part of the laminated glass from a position of 0 mm to a position of 25 mm from the first end toward the second end,
$Q_A$': a secondary loss coefficient of the laminated glass in a part of the laminated glass from a position of 100 mm to a position of 125 mm from the first end toward the second end,

$$\text{change rate A4 (\%)} = (|R_A' - S_A'|/S_A') \times 100 \quad \text{...(A4)}$$

$R_A$': a secondary loss coefficient of the laminated glass in a part of the laminated glass from a position of 0 mm to a position of 25 mm from the second end toward the first end,
$S_A$': a secondary loss coefficient of the laminated glass in a part of the laminated glass from a position of 100 mm to a position of 125 mm from the second end toward the first end,
configuration B': change rate B3 represented by formula (B3) below is less than 10%, and change rate B4 represented by formula (B4) below is less than 10%,

$$\text{change rate B3 (\%)} = (|P_B' - Q_B'|/Q_B') \times 100 \quad \text{...(B3)}$$

$P_B$': a secondary resonance frequency of the laminated glass in a part of the laminated glass from a position of 0 mm to a position of 25 mm from the first end toward the second end,
$Q_B$': a secondary resonance frequency of the laminated glass in a part of the laminated glass from a position of 100 mm to a position of 125 mm from the first end toward the second end,

$$\text{change rate B4 (\%)} = (|R_B' - S_B'|/S_B') \times 100 \quad \text{...(B4)}$$

$R_B$': a secondary resonance frequency of the laminated glass in a part of the laminated glass from a position of 0 mm to a position of 25 mm from the second end toward the first end,
$S_B$': a secondary resonance frequency of the laminated glass in a part of the laminated glass from a position of 100 mm to a position of 125 mm from the second end toward the first end.

[FIG. 1]

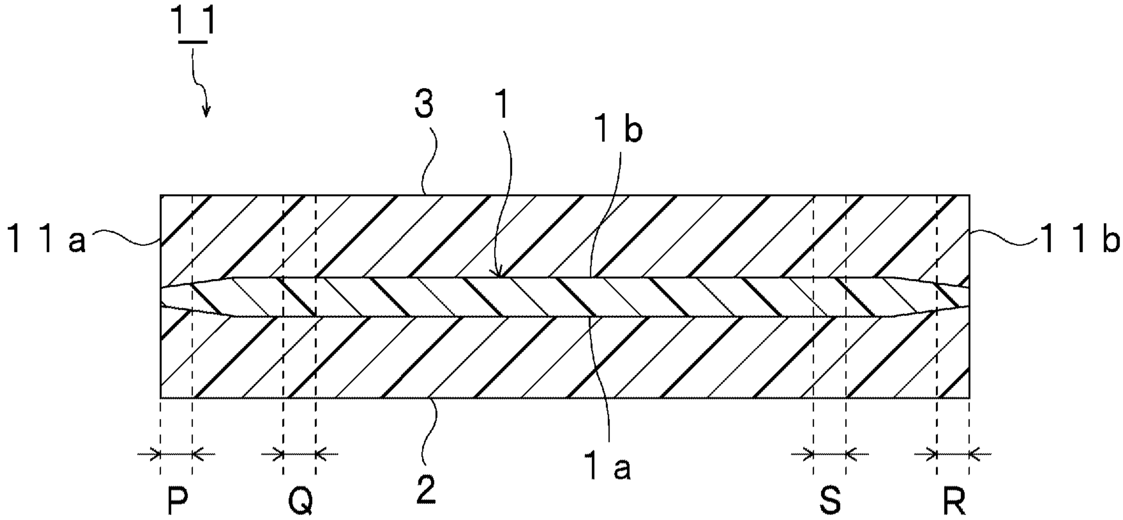


[FIG. 2]

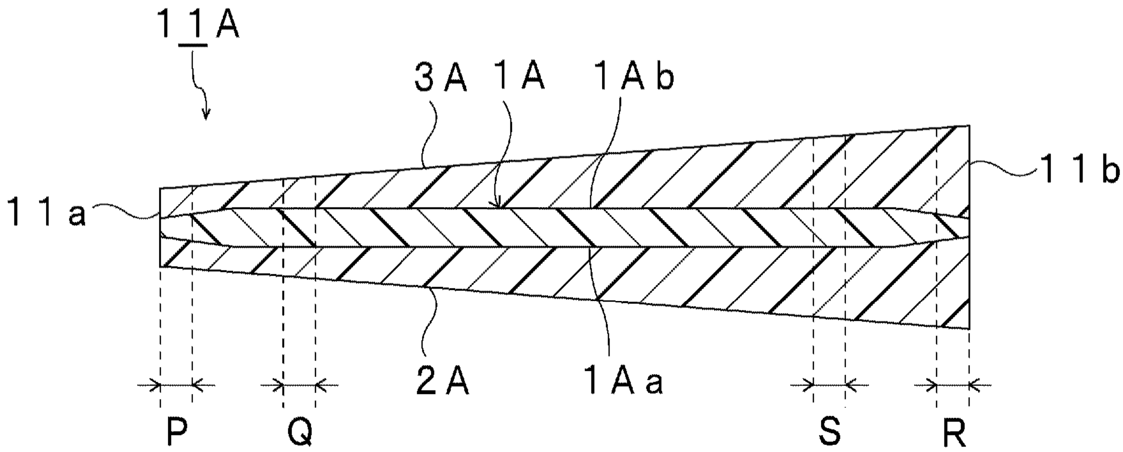

[FIG. 3]

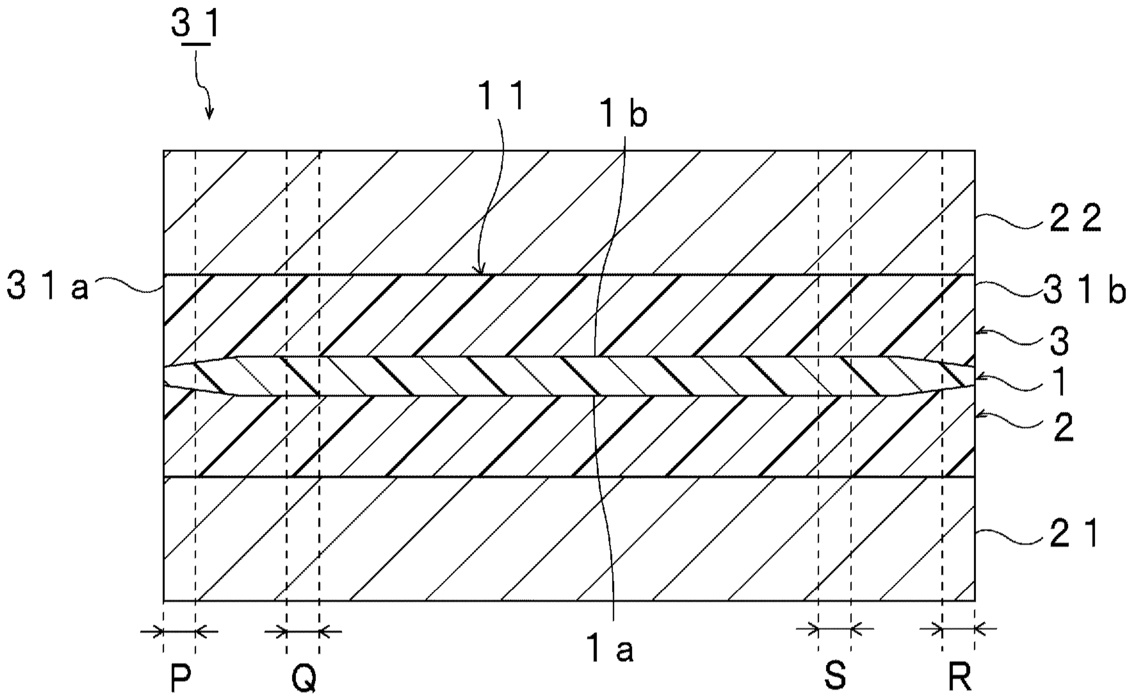
31
11
1b
22
31a
31b
3
1
2
21
1a
P
Q
S
R

[FIG. 4]

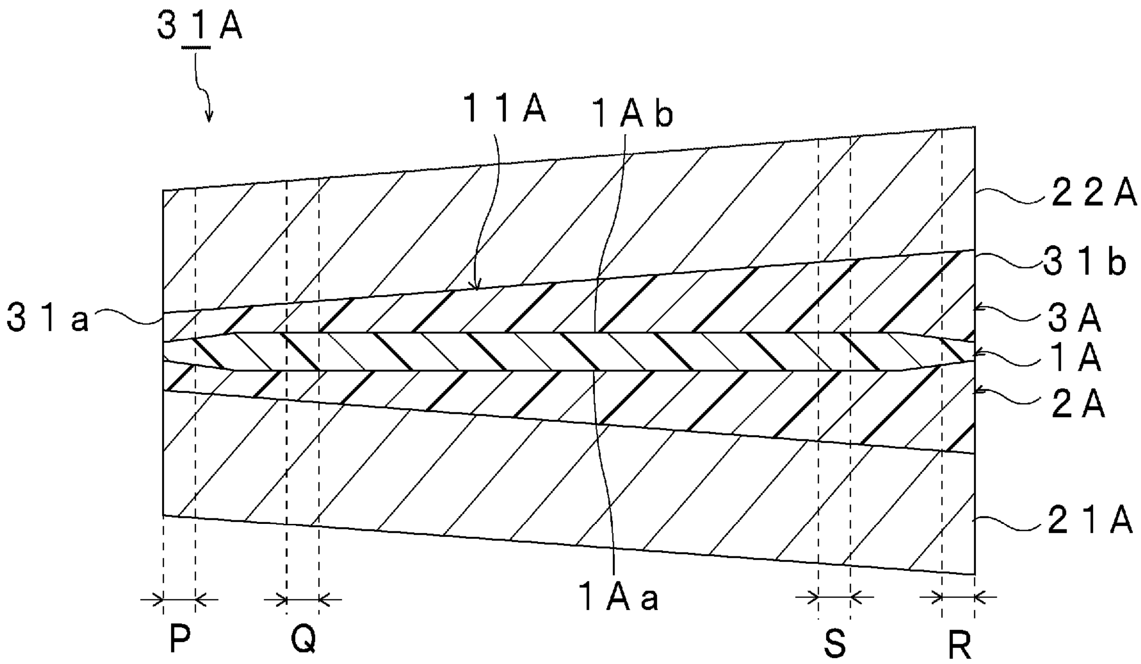
31A
11A
1Ab
22A
31a
31b
3A
1A
2A
21A
1Aa
P
Q
S
R

**INTERNATIONAL SEARCH REPORT**

International application No.
**PCT/JP2024/012452**

**A. CLASSIFICATION OF SUBJECT MATTER**

***C03C 27/12***(2006.01)i; ***B32B 17/10***(2006.01)i
FI: C03C27/12 Z; B32B17/10

According to International Patent Classification (IPC) or to both national classification and IPC

**B. FIELDS SEARCHED**

Minimum documentation searched (classification system followed by classification symbols)

C03C27/12; B32B17/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 60-21834 A (MITSUBISHI MONSANTO CHEM CO.) 04 February 1985 (1985-02-04) p. 3, lower right column, line 3 to p. 4, upper left column, line 2, p. 4, lower right column, lines 10-14, examples, fig. 2 | 1-4, 20-21 |
| Y | | 5-16, 18 |
| A | | 17,19 |
| X | Microfilm of the specification and drawings annexed to the request of Japanese Utility Model Application No. 86230/1987 (Laid-open No. 195551/1988) (MITSUBISHI MONSANTO CHEM CO.) 15 December 1988 (1988-12-15), p. 13, lines 4-8, example 1, table 1, fig. 4 | 1-4, 20-21 |
| Y | | 1-21 |
| X | JP 2013-91793 A (KURARAY CO., LTD.) 16 May 2013 (2013-05-16) paragraphs [0053]-[0058], [0071], examples 1-4, table 1 | 1-9, 18, 20-21 |
| Y | | 1-21 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 June 2024** | **18 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/012452**

**C. DOCUMENTS CONSIDERED TO BE RELEVANT**

| Category* | Citation of document, with indication, where appropriate, of the relevant passages | Relevant to claim No. |
|---|---|---|
| X | WO 2016/125896 A1 (SEKISUI CHEMICAL CO., LTD.) 11 August 2016 (2016-08-11) examples 1-26, tables 1-4 | 1-12, 15-16, 18, 20-21 |
| Y | | 5-16, 18 |
| A | | 17, 19 |
| Y | WO 2018/143442 A1 (SEKISUI CHEMICAL CO., LTD.) 09 August 2018 (2018-08-09) paragraphs [0027]-[0037], examples 1-13, tables 1-2 | 5-16, 18 |
| Y | WO 2017/057334 A1 (SEKISUI CHEMICAL CO., LTD.) 06 April 2017 (2017-04-06) paragraphs [0052]-[0053], examples 1-5, table 1, fig. 1 | 1-21 |

Form PCT/ISA/210 (second sheet) (July 2022)

**INTERNATIONAL SEARCH REPORT**
**Information on patent family members**

International application No.
**PCT/JP2024/012452**

| Patent document cited in search report | Publication date (day/month/year) | Patent family member(s) | Publication date (day/month/year) |
|---|---|---|---|
| JP 60-21834 A | 04 February 1985 | (Family: none) | |
| JP 63-195551 U1 | 15 December 1988 | (Family: none) | |
| JP 2013-91793 A | 16 May 2013 | US 2014/0020759 A1<br>paragraphs [0061]-[0067], [0078], example 1-6, table 1<br>WO 2012/133668 A1<br>EP 2692781 A1<br>CN 103476841 A<br>KR 10-2013-0130870 A | |
| WO 2016/125896 A1 | 11 August 2016 | US 2018/0022071 A1<br>example 1-26, table 1-4<br>EP 3255019 A1<br>KR 10-2017-0115050 A<br>CN 107406311 A | |
| WO 2018/143442 A1 | 09 August 2018 | US 2020/0023619 A1<br>paragraphs [0030]-[0039], example 1-13, table 1-2<br>EP 3578530 A1<br>CN 110167898 A<br>KR 10-2019-0113751 A | |
| WO 2017/057334 A1 | 06 April 2017 | US 2019/0143649 A1<br>paragraphs [0055]-[0056], example 1-5, table 1, fig. 1<br>JP 2018-76229 A<br>EP 3357887 A1<br>CN 108137403 A<br>KR 10-2018-0061175 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013175101 A1